# EUROPÄISCHE PATENTSCHRIFT

(11) **EP 3 795 339 B1**
(45) Veröffentlichungstag und Bekanntmachung des Hinweises auf die Patenterteilung: **05.03.2025**
(21) Anmeldenummer: 20187501.0
(22) Anmeldetag: 23.07.2020
(51) Int. Cl.: B29C 65/20, B29C 65/30, B29C 65/32

(54) **HEIZELEMENT ZUR ERWÄRMUNG VON KUNSTSTOFFPROFILEN UND VERFAHREN ZUR ENTFERNUNG VON MATERIAL AUSSERHALB DER SCHWEISSZONE**
HEATING ELEMENT FOR HEATING PLASTICS PROFILES AND METHOD FOR REMOVING MATERIAL OUTSIDE THE WELDING ZONE
ÉLÉMENT CHAUFFANT POUR CHAUFFER DES PROFILÉS EN PLASTIQUE ET PROCÉDÉ D'ENLÈVEMENT DE MATIÈRE À L'EXTÉRIEUR DE LA ZONE DE SOUDAGE

(30) Priorität: 17.09.2019 DE 102019125008
(43) Veröffentlichungstag der Anmeldung: 24.03.2021
(73) Patentinhaber: Urban GmbH & Co. Maschinenbau KG, 87700 Memmingen (DE)
(72) Erfinder: Henkel, Markus, 87752 Holzgünz-Schwaighausen (DE)
(74) Vertreter: Patentanwälte Olbricht, Buchhold, Keulertz Partnerschaft mbB

(56) Entgegenhaltungen:
- EP-A1- 0 139 350
- WO-A1-2013/132406
- US-B2- 7 328 734

## Beschreibung

Die Erfindung betrifft ein Heizelement zur Erwärmung von Kunststoffprofilen vor deren Verbindung durch Schweißen umfassend zumindest eine Kontaktplatte mit einer zumindest einem Kunststoffprofil zugewandten Kontaktfläche, zumindest ein Erwärmungselement, welches in Wirkverbindung mit der Kontaktplatte steht, wobei die Kontaktplatte zumindest eine Ausnehmung aufweist, welche in der Kontaktfläche angeordnet ist und welche die Kontaktfläche unterbricht, wobei die Ausnehmung die Kontaktplatte komplett durchdringt oder die Ausnehmung eine Bodenfläche aufweist.

Die Erfindung betrifft weiterhin eine Vorrichtung zum Verschweißen von Kunststoffprofilen mit einem Heizelement sowie ein Verfahren zum Verschweißen von Kunststoffprofilen, insbesondere unter Verwendung einer erfindungsgemäßen Vorrichtung.

Die Vorrichtung ist geeignet zur Entfernung von Material außerhalb der Schweißzone eines oder mehrerer Kunststoffprofile.

Die Herstellung von Rahmen, insbesondere für Fenster oder Türen aus Kunststoffprofilen, ist bekannt. Dabei werden unterschiedlich geformte Kunststoffprofile zunächst auf Maß und Gehrung gesägt und anschließend zu Rahmen verschweißt. Eine zuverlässige und kostengünstige Möglichkeit für eine solche Verschweißung ist das sogenannte Spiegelschweißen. Dabei werden die Stirnseiten der Kunststoffprofile zunächst an ein Heizelement, den Schweißspiegel, gedrückt, wobei das Material der Kunststoffprofile durch die vom Schweißspiel übertragene Wärme erweicht und aufgeschmolzen oder plastifiziert wird. Ist dieser Zustand erreicht, wird der Schweißspiegel entfernt und die an ihren Stirnseiten plastifizierten Kunststoffprofile aneinander gedrückt und somit verschweißt. Das plastifizierte Material eines Kunststoffprofils verbindet sich dabei mit dem plastifizierten Material eines anderen Kunststoffprofils. Dadurch entsteht eine durchgehende, langzeitstabile stoffschlüssige Verbindung zwischen zwei Kunststoffprofilen.

Nachteilig an dieser Verbindungstechnik ist, dass beim Aneinanderdrücken der plastifizierten Stirnseiten der Kunststoffprofile ein Schweißwulst auf den äußeren Oberflächen der Verbindungsstelle der Kunststoffprofile entsteht. Dieser Schweißwulst wird durch beim Zusammendrücken verdrängtes Material gebildet. Der Schweißwulst führt zu einer unregelmäßigen Oberfläche der Verbindungsstelle und ist optisch unansehnlich auf Sichtflächen. Im Stand der Technik existieren bereits mehrere Ansätze, diesen Schweißwulst zu verhindern oder, falls dies nicht möglich ist, nach dem Verschweißen zu entfernen.

Eine Möglichkeit einen Schweißwulst zu verhindern ist, angrenzend an die späteren Sichtflächen der Kunststoffprofile vor dem Schweißen Material zu entfernen. Dies kann beispielsweise durch Abfräsen eines Teils des Umfangs der Kunststoffprofile erfolgen. Durch dieses Entfernen von Material ist angrenzend an den Sichtbereich kein beim Schweißen plastifiziertes Material mehr vorhanden, was beim Zusammendrücken nach außen verdrängt wird. Dadurch kann ein Schweißwulst verhindert werden. Trotz dieser Entfernung von Material angrenzend an den Sichtbereich der Kunststoffprofile kann es dennoch vorkommen, dass auch im Bereich des entfernten Materials zumindest eine Teilplastifizierung erfolgt und beim Zusammendrücken oder Verschweißen der Kunststoffprofile immer noch ungewollte Verformungen im Sichtbereich auftreten. Beispielsweise werden die aneinanderstoßenden äußeren Oberflächen der Kunststoffprofile nach innen oder nach außen gedrückt.

US 7 328 734 B2 offenbart eine Maschine und ein Verfahren zum Zusammenschweißen von thermoplastischen Regenrinnen oder anderen Werkstücken. Eine stationäre und eine bewegliche Platte sind jeweils an einer Rahmenbaugruppe befestigt. Werkstückhalter und entsprechende Klemmen, die speziell zum Einspannen von Regenrinnen oder anderen Werkstücken konfiguriert sind, sind auf der feststehenden und der beweglichen Platte zusammen mit einer Abstandsplatte zum Positionieren und Halten der Enden zweier Werkstücke in einer Position zum Zusammenschweißen der Enden angeordnet. Ein Heizgerät ist vorgesehen, um die Enden der Werkstücke auf eine gewünschte Schweißtemperatur zu erwärmen, und eine Presse ist vorgesehen, um die verformten Enden der Werkstücke zum Schweißen zusammenzupressen und zu halten.

WO 2013 132 406 A1 beschreibt ein Verfahren zum Schweißen von Profilelementen aus Kunststoff, insbesondere PVC, wobei zwei Profilelemente hergestellt werden, die so angeordnet sind, dass die jeweiligen zu verschweißenden Bereiche einander zugewandt sind. Anschließend wird in Übereinstimmung mit mindestens einem zu verschweißenden Bereich der Profilelemente eine Nut hergestellt. Nach dem Erwärmen der zu verschweißenden Bereiche werden diese miteinander verbunden, wobei die Profilelemente gegeneinander gepresst werden, um die zu verschweißenden Zonen in gegenseitigem Kontakt zu halten. Ein Aufnahmedrücker verhindert das Entstehen einer Schweißraupe auf der Oberfläche der Profilelemente.

EP 0 139 350 A1 offenbart ein Widerstandsheizelement zum sterilen Verschweißen von thermoplastischen Rohren, wobei ein schmelzbares Signalmittel vorgesehen ist, das die Anzeige der ersten Verwendung des Heizelements ermöglicht. Das Signalmittel liefert hierzu ein elektrisches Signal, das vor der ersten Benutzung durch Schmelzen des Signalmittels eliminiert wird, wodurch die erste Benutzung eingeleitet werden kann. Wird das elektrische Signal bei erneuter Verwendung des Heizelements nicht erzeugt, ist der sterile Verbindungsapparat, in dem das Heizelement verwendet wird, so programmiert, dass er das Heizelement aussortiert.

Eine Aufgabe der vorliegenden Erfindung besteht darin, Lösungen vorzuschlagen, mit denen die Oberflächenqualität, insbesondere ein glattes und durchgehendes Erscheinungsbild beim Verschweißen von Kunststoffprofilen, weiter verbessert werden kann.

Ein erfindungsgemäßes Heizelement ist in Anspruch 1 definiert.

Erfindungsgemäß wird damit ein gegenüber dem Stand der Technik verbessertes Heizelement vorgeschlagen. Dieses Heizelement ist als Schweißspiegel für die Verwendung beim Spiegelschweißen vorgesehen. Die Erfindung wird im Zusammenhang mit dem Spiegelschweißen von Kunststoffprofilen beschrieben. Selbstverständlich kann ein erfindungsgemäßes Heizelement aber auch zum Erwärmen bzw. Verschweißen anderer Kunststoffteile, wie beispielsweise Platten oder Stäbe eingesetzt werden. Ebenso eignet sich ein erfindungsgemäßes Heizelement zum Verschweißen von Kunststoffprofilen, die für andere Anwendungen als den Fenster- oder Türenbau vorgesehen sind.

Ein erfindungsgemäßes Heizelement umfasst zumindest eine Kontaktplatte, die dazu vorgesehen ist, mit einem zu verschweißenden Kunststoffprofil in Kontakt gebracht zu werden. Diese Kontaktplatte weist eine Kontaktfläche auf, die beim Verschweißen dem Kunststoffprofil zugewandt ist. Beim Verschweißen berührt die Kontaktfläche zumindest teilweise das Kunststoffprofil, insbesondere dessen Stirnseite oder Stirnfläche. Die Kontaktplatte mit der Kontaktfläche ist dazu vorgesehen, Material an der Stirnseite eines Kunststoffprofile zu erwärmen und zu plastifizieren. Üblicherweise umfasst ein Heizelement zur Herstellung von Rahmen aus Kunststoffprofilen zwei Kontaktplatten, die jeweils eine Kontaktfläche aufweisen. In diesem Fall mit zwei Kontaktflächen ist eine dieser Kontaktflächen einem ersten Kunststoffprofil zugewandt und die andere der Kontaktflächen einem zweiten, mit dem ersten zu verschweißenden Kunststoffprofil zugewandt. Weiterhin umfasst ein erfindungsgemäßes Heizelement zumindest ein Erwärmungselement. Das Erwärmungselement ist dazu vorgesehen, das Heizelement zu erhitzen. Dabei kann das Erwärmungselement beispielsweise elektrische Heizwendel aufweisen. Das Erwärmungselement kann aber auch durch andere Technologien erwärmt werden. Das Erwärmungselement steht in Wirkverbindung mit der Kontaktplatte. Unter Wirkverbindung ist hier zu verstehen, dass eine Wärmeübertragung zwischen Erwärmungselement und Kontaktplatte erfolgt. Eine gute Wärmeübertragung wird beispielsweise durch flächiges Aufliegen und Berühren von Kontaktplatte mit Erwärmungselement erreicht.

Erfindungsgemäß weist die Kontaktplatte zumindest eine Ausnehmung auf, die in der Kontaktfläche angeordnet ist und die Kontaktfläche unterbricht. Beim Erwärmen einer Stirnseite eines Kunststoffprofils erfolgt im Bereich der Ausnehmung keine Berührung zwischen der Kontaktplatte und dem Kunststoffprofil. Dadurch erfolgt im Bereich der Ausnehmung auch keine Wärmeübertragung vom Heizelement auf das Kunststoffprofil. Die Bereiche des Kunststoffprofils, die beim Erwärmen der Ausnehmung gegenüber angeordnet sind, werden somit nicht oder nur in sehr geringem Maße erwärmt. Die Ausnehmung in der Kontaktfläche bewirkt somit, dass das zu verschweißende Kunststoffprofil bereichsweise nicht erwärmt wird. Dadurch verbleibt das Material des Kunststoffprofils in diesem Bereich deutlich fester als in dem Bereich, in dem die Kontaktfläche am Kunststoffprofil aufliegt und dieses plastifiziert. Günstiger Weise ist die Ausnehmung in der Kontaktfläche so angeordnet, dass sie beim Zusammenführen des Heizelementes mit dem Kunststoffprofil einer nach außen gewandten Sichtfläche des Kunststoffprofils gegenüberliegt. Damit wird der äußere Umfangsbereich des Kunststoffprofils nicht oder nur sehr wenig erwärmt, die Bereiche abseits der Sichtfläche, welche in Berührung mit der Kontaktfläche stehen, werden jedoch erwärmt und plastifiziert. Beim anschließenden Zusammendrücken und/oder Verschweißen des Kunststoffprofils verbleiben die der Ausnehmung gegenüber liegenden Bereiche in einem festen Zustand. Dadurch werden Verformungen beim Zusammendrücken in diesen Bereichen signifikant verringert. Dadurch, dass das Material in diesen Bereichen eine höhere Festigkeit aufweist, lässt es sich beim Zusammendrücken weniger leicht verformen und verbleibt somit formstabiler. Die Oberflächenqualität an der Verbindungsstelle des Kunststoffprofils mit einem anderen Kunststoffprofil wird somit deutlich verbessert. Erfindungsgemäß kann die Ausnehmung die Kontaktplatte komplett durchdringen. Die Ausnehmung kann beispielsweise aus der Kontaktplatte herausgefräst werden. Im Bereich der Ausnehmung ist in diesem Fall eine durchgehende Öffnung in der Kontaktplatte vorhanden. Alternativ kann die Ausnehmung taschenförmig ausgeführt sein. Eine solche taschenförmige Ausnehmung weist dann eine Bodenfläche auf, die die Ausnehmung auf der der Kontaktfläche abgewandten Seite begrenzt. Die Bodenfläche ist dieser Ausführungsform gegenüber der Kontaktfläche zurückversetzt, so dass die Bodenfläche bei der Zusammenführung mit dem Kunststoffprofile in einem Abstand zu diesem angeordnet ist und das Kunststoffprofil somit nicht berührt.

Ein erfindungsgemäßes Heizelement mit zumindest einer Ausnehmung erwärmt ein Kunststoffprofil beim oder vor dem Verschweißen nur in bestimmten Bereichen. In anderen Bereichen wird das Kunststoffprofil nicht erwärmt und verbleibt in einem festen Zustand. Beim Verschweißen des Kunststoffprofils bleibt dieser Bereich, der sich in einem festeren Zustand befindet, formstabil und bewirkt so eine deutlich verbesserte Oberflächenqualität der Verbindungsstelle.

Ein erfindungsgemäßes Heizelement kann als Teil einer Vorrichtung eingesetzt werden, mit der an einem oder mehreren Kunststoffprofilen Material entfernt wird, so dass außerhalb der Schweißstelle des oder der Kunststoffprofile eine Aussparung an Material vorliegt. Das Entfernen von Material außerhalb der Schweißstelle ist besonders günstig für eine gute Oberflächenqualität in diesem Bereich. Diese Vorgehensweise kann englischsprachig auch als "cut out of weldingzone" oder abgekürzt COW bezeichnet werden.

Beim Erwärmen eines Kunststoffprofils durch das Heizelement liegt die Kontaktfläche auf der Stirnseite des Kunststoffprofils auf. Der Bereich, in dem Berührung zwischen Heizelement und Kunststoffprofil erfolgt, ist die Auflagefläche. Die zumindest eine Ausnehmung in der Kontaktfläche ist dazu vorgesehen, die Auflagefläche zu begrenzen. Durch diese Begrenzung wird das Kunststoffprofil nur bereichsweise stark erwärmt und plastifiziert. Im Bereich der Ausnehmung liegt die Kontaktplatte nicht an Kunststoffprofile auf, sodass hier keine Erwärmung erfolgt und das Kunststoffprofil in einem festen Zustand verbleibt.

Bei einer bevorzugten Ausgestaltung des Vorschlags ist vorgesehen, dass die Kontaktfläche in sich homogen ausgeführt ist, wobei die Kontaktfläche plan ausgeführt ist oder eine regelmäßige Kontur, beispielsweise eine gerippte Oberfläche, aufweist. Die Kontaktfläche ist in sich homogen ausgeführt. Dies bedeutet, dass die Oberfläche regelmäßig über den gesamten Bereich der Kontaktfläche ausgeführt ist. Im einfachsten Fall ist die Kontaktfläche plan und glatt ausgeführt. Zur Erhöhung der Auflagefläche kann die Kontaktfläche jedoch auch konturiert ausgeführt sein. Eine solche konturierte Ausgestaltung kann beispielsweise durch regelmäßig auf der Kontaktfläche angeordnete Rippen geschaffen werden. Diese Rippen können dabei einen prismenartigen oder auch halbrunden Querschnitt aufweisen.

Des Weiteren ist vorgesehen, dass die Ausnehmung eine Bodenfläche aufweist und die Bodenfläche plan ausgeführt ist oder eine regelmäßige Kontur aufweist. In der Ausführungsform, in der die Ausnehmung eine Bodenfläche aufweist, kann diese plan oder ebenfalls konturiert ausgeführt sein. Üblicherweise ist eine solche Bodenfläche plan ausgeführt. Eine solche plane Ausführung der Bodenfläche kann in einfacher Weise durch Herstellung der Ausnehmung durch einen Fräser erzeugt werden.

In einer vorteilhaften Ausgestaltung ist vorgesehen, dass die Ausnehmung eine Bodenfläche aufweist und die Bodenfläche parallel zur Kontaktfläche verläuft. Auch diese Ausführungsform ist besonders einfach durch Fräsen herzustellen.

Geschickter Weise ist vorgesehen, dass die Kontaktplatte und das Erwärmungselement als unterschiedliche Bauteile ausgeführt sind, wobei die Kontaktplatte zumindest teilweise flächig auf dem Erwärmungselement aufliegt, um eine gute Wärmeübertragung zwischen beiden Bauteilen sicherzustellen. In dieser Ausführungsform werden Kontaktplatte und Erwärmungselement durch unterschiedliche Bauteile gebildet. Dies hat den Vorteil, dass ein einziges Erwärmungselement mit mehreren unterschiedlich ausgeführten Kontaktplatten abwechselnd verbunden werden kann. Kontaktplatte und Erwärmungselement sind dabei so ausgeführt, dass eine möglichst große, flächige Berührung zwischen beiden Bauteilen vorliegt. Durch diese Berührung ist ein guter Wärmeübergang vom Erwärmungselement auf die Kontaktplatte sichergestellt. Günstiger Weise ist dazu das Erwärmungselement plattenförmig ausgeführt und die Kontaktplatte auf ihrer der Kontaktfläche abgewandten Seite formschlüssig passend zum Heizelement geformt.

Des Weiteren ist günstiger Weise vorgesehen, dass die Form der Ausnehmung in einer Draufsicht auf die Kontaktfläche zumindest teilweise der Form der Außenkontur der Stirnseite eines zu verschweißenden Kunststoffprofiles entspricht. Die Form der Ausnehmung ist in dieser Ausführungsform so gewählt, dass sie in einer Draufsicht auf die Kontaktfläche zumindest zum Teil der Außenkontur des zu verschweißenden Kunststoffprofils entspricht. Im Bereich der Ausnehmung erfolgt keine oder nur eine sehr geringe Erwärmung des Kunststoffprofils. Diese geringe Erwärmung ist gerade an der Außenkontur, wo sich nach dem Verschweißen des Kunststoffprofils die Sichtfläche befindet, vorteilhaft, da das Material durch die geringe Erwärmung an dieser Stelle fest verbleibt und sich beim Verschweißen formstabil verhält. Bei einem Fensterrahmen befindet sich jedoch nicht im gesamten Umfangsbereich eines Kunststoffprofils eine Sichtfläche. Für eine gute Oberflächenqualität an der Sichtfläche ist es somit oftmals ausreichend, am Schweißspiegel eine oder mehrere Ausnehmungen so anzuordnen, dass diese beim Zusammenführen mit dem Kunststoffprofil an den Stellen angeordnet sind, wo sich später Sichtflächen befinden. An Stellen der Außenkontur des Kunststoffprofils, wo später keine Sichtflächen vorhanden sind, ist eine Ausnehmung nicht unbedingt erforderlich.

Vorteilhafter Weise ist vorgesehen, dass die Innenkontur der Ausnehmung der Form des Außenumfangs eines zu verschweißenden Kunststoffprofiles entspricht und sich die Außenkontur der Ausnehmung eine größere Fläche umschließt als die Innenkontur der Ausnehmung. Die Ausnehmung wird in dieser Ausführungsform von einer Innenkontur und von einer Außenkontur begrenzt. Die Außenkontur der Ausnehmung ist dabei dem äußeren Rand der Kontaktplatte bzw. der Kontaktfläche zugewandt, die Innenkontur ist die Begrenzung der Ausnehmung, die dem äußeren Rand der Kontaktfläche abgewandt ist. Günstiger Weise ist die Form der Innenkontur der Ausnehmung gleich der Form des Außenumfangs des zu verschweißenden Kunststoffprofils. Beim Verschweißen wird das Heizelement so zum Kunststoffprofil positioniert, dass sich der Außenumfang des Kunststoffprofils deckungsgleich zur Innenkontur der Ausnehmung befindet. Unter Außenumfang des Kunststoffprofils ist dabei der Außenumfang zu verstehen, der die Stirnseite oder Stirnfläche des Kunststoffprofils umschließt. Die Ausnehmung erstreckt sich von deren Innenkontur, deren Form des Außenumfangs des Kunststoffprofils entspricht, nach außen bis zur Außenkontur der Ausnehmung. Beim Verschweißen ist die Ausnehmung somit gegenüber dem Bereich positioniert, welcher sich an den Außenumfang der Stirnfläche des Kunststoffprofils nach außen anschließt. Dadurch wird der Bereich außerhalb des Außenumfangs des Kunststoffprofils nicht vom Heizelement berührt und somit nicht direkt erwärmt. Auch in dieser Ausführungsform ist es meist ausreichend, wenn die von Innen- und Außenkontur definierte Ausnehmung nur bereichsweise den Außenumfang des Kunststoffprofils umschließt, nämlich dort wo später Sichtflächen vorhanden sind und eine besonders gute Oberflächengüte nach dem Verschweißen benötigt wird.

Des Weiteren ist in dem Vorschlag vorteilhafter Weise vorgesehen, dass die Ausnehmung in einer Draufsicht auf die Kontaktfläche mehrere linear verlaufende Bereiche aufweist, welche an den Stellen der Kontaktfläche positioniert sind, die dazu vorgesehen sind, bei der Zusammenführung des Heizelementes mit einem zu verschweißenden Profil der mit einer Sichtfläche versehenen Außenkontur des Profils gegenüber zu liegen. In dieser Ausführungsform ist die Ausnehmung so gestaltet, dass sie nur bereichsweise dort angeordnet ist, wo beim Erwärmen Bereiche des Kunststoffprofils anliegen, die später eine Sichtfläche bilden. Üblicherweise sind diese Bereiche der Sichtflächen linear, wodurch auch die entsprechenden Bereiche der Ausnehmung linear ausgeführt sind. Selbstverständlich können diese Bereiche der Ausnehmung auch eine andere Form aufweisen, falls das Kunststoffprofil eine andere, nichtlineare Form an dieser Stelle aufweist.

Erfindungsgemäß weist das Heizelement zumindest ein Verbindungselement auf, welches die Kontakplatte mit dem Erwärmungselement lösbar fest verbindet. Erfindungsgemäß werden Kontaktplatte und Heizelement durch unterschiedliche Bauteile gebildet, die über ein Verbindungselement einfach und zuverlässig miteinander verbunden und voneinander getrennt werden können. Eine solche Ausführungsform ermöglicht ein leichtes Austauschen der Kontaktplatte und somit eine einfache Anpassungszeit des Heizelementes an verschiedene Kunststoffprofile. Das Verbindungselement kann dabei als einfache Schraub- oder Steckverbindung ausgeführt sein. Weiterhin ist es möglich, dass am Erwärmungselement Führungen vorgesehen sind, in die die Kontaktplatte eingeschoben wird. Weiterhin sind verschiedene Ausführungsformen von Klemmvorrichtungen als Verbindungselement geeignet, welche die Kontaktplatte kraft- und/oder formschlüssig an das Erwärmungselement drücken und so für einen guten Wärmeübergang zwischen beiden Teilen sorgen.

Des Weiteren ist vorgesehen, dass das Verbindungselement zumindest einen Betätigungshebel und zumindest ein Druckstück umfasst, wobei das Druckstück durch den Betätigungshebel zum Erwärmungselement hin- und von diesem wegbewegbar ausgeführt ist und das Druckstück zumindest teilweise in seiner Form komplementär zu einem Rand der Kontaktplatte ausgeführt ist. In dieser Ausführungsform ist das Verbindungselement als mehrteiliger Mechanismus ausgeführt. Das Verbindungselement umfasst dabei ein Druckstück, welches zumindest einen Bereich der Kontaktplatte und einen Bereich des Erwärmungselementes umfasst. Das Druckstück ist durch einen Betätigungshebel zum Erwärmungselement hin und von diesem wegbewegbar. Im vom Entfernungselement entfernten Zustand kann die Kontaktplatte entnommen oder eine Kontaktplatte zum Erwärmungselement hin bewegt werden. Anschließend wird der Betätigungshebel betätigt, wodurch das Druckstück zum Erwärmungselement hin bewegt wird und die Kontaktplatte dann formschlüssig mit dem Erwärmungselement verbindet. Ein solcher Mechanismus ist einfach zu bedienen und bietet eine stabile Verbindung zwischen Kontaktplatte und Erwärmungselement.

In einer vorteilhaften Ausgestaltung ist vorgesehen, dass die Kontaktplatte aus einem Aluminiumbasiswerkstoff besteht und eine Beschichtung aufweist, die Teflon enthält. Als Werkstoff für die Kontaktplatte sind generell alle Werkstoffe geeignet, die eine gute Wärmeleitfähigkeit aufweisen. Durch eine gute Wärmeleitfähigkeit ist sichergestellt, dass die Wärme vom Erwärmungselement zügig auf das an der Kontaktfläche anliegende, zu verschweißende Kunststoffprofil übertragen wird. In der Praxis hat sich Aluminium oder ein Aluminiumsbasiswerkstoff als besonders geeignet für die Kontaktplatte herausgestellt. Selbstverständlich können aber auch andere gut wärmeleitfähige Werkstoffe, Metalle wie Nichtmetalle, als Werkstoff für eine Kontaktplatte dienen. Um zu verhindern, dass beim Verschweißen oder Erwärmen Kunststoffmaterial des Kunststoffprofils an der Kontaktplatte verbleibt, ist diese günstiger Weise mit einer Beschichtung versehen, die ein Anhaften des Kunststoffs verringert oder verhindert. In der Praxis haben sich Teflonbeschichtungen als besonders geeignet herausgestellt, da diese zuverlässig Haftung verhindern und zugleich temperaturstabil sind. Solche Teflonbeschichtungen können beispielsweise in Form einer Folie auf die Kontaktfläche aufgebracht werden. Es ist allerdings auch möglich eine Teflonbeschichtungen durch ein Spray oder durch Auftragen mit einem Pinsel oder einer Rolle auf der Kontaktfläche aufzubringen. Darüber hinaus sind auch andere Anti-Haftbeschichtungen, die auf anderen Materialien beruhen, geeignete Beschichtungen für die Kontaktplatte. In manchen Fällen wird auch gar keine Beschichtung benötigt, es ist ausreichend, die Oberfläche der Kontaktplatte entsprechend glatt zu polieren, um ein Anhaften von Kunststoffmaterial beim Erwärmen zu verhindern.

Geschickter Weise ist vorgesehen, dass zwei Kontaktplatten vorgesehen sind, welche im Betriebszustand auf jeweils einer Seite des Erwärmungselementes angeordnet sind und welche bezogen auf die Mittelebene des Erwärmungselementes zueinander symmetrisch ausgeführt sind. In dieser Ausführungsform umfasst das Heizelement zwei Kontaktplatten. Diese Kontaktplatten sind auf gegenüberliegenden Seiten des Erwärmungselementes mit diesem verbunden. Diese Ausführungsform ist dazu vorgesehen, zwei Kunststoffprofile gleichzeitig zu erwärmen bzw. zu plastifizieren. Dieser Anwendungsfall ist der übliche Fall bei der Herstellung von Rahmen aus Kunststoffprofilen. Der Betriebszustand ist hier zu verstehen, dass das Heizelement einsatzbereit zur Erwärmung von Kunststoffprofilen ist. In diesem Betriebszustand sind die beiden Kontaktplatten mit dem Erwärmungselement verbunden. Für die Verbindung von zwei Kunststoffprofilen mit identischem Querschnitt sind die Kontaktplatten zur Mittelebene des Erwärmungselementes symmetrisch ausgeführt. Beide Kontaktplatten weisen Ausnehmungen auf, die so positioniert sind, dass bestimmte Bereiche des zu erwerbenden Kunststoffprofils nicht berührt werden.

Des Weiteren ist günstiger Weise vorgesehen, dass die Kontaktplatte mehrteilig ausgeführt ist und zumindest einen Einsatz aufweist, der vom Rest der Kontaktplatte trennbar ausgeführt ist, wodurch eine Anpassung der Kontaktplatte durch Entnehmen oder Austauschen dieses Einsatzes an ein anders geformtes Kunststoffprofil ermöglicht wird. In dieser Ausführungsform wird eine Anpassbarkeit des Heizelementes an unterschiedliche Geometrien von Kunststoffprofilen nicht durch einen kompletten Austausch der Kontaktplatte, sondern durch einen Austausch eines Einsatzes der Kontaktplatte ermöglicht.

Ein solcher Einsatz ist trennbar vom Rest der Kontaktplatte ausgeführt. Die Verbindung von Einsatz zum Rest der Kontaktplatte kann beispielsweise durch eine Steckverbindung erfolgen. Vorteilhaft bei dieser Ausführungsform ist, dass die zur Anpassung des Heizelementes benötigten Ersatzteile klein und kostengünstig sind.

Vorteilhafter Weise ist vorgesehen, dass die Kontaktplatte zumindest ein beweglich ausgeführtes Element umfasst, wobei dieses beweglich ausgeführte Element über einen Einstellmechanismus bewegbar ausgeführt ist und die Kontaktplatte durch die Bewegung des beweglich ausgeführten Elementes an die Form eines Profilstückes anpassbar ist. In dieser Ausführungsform ist die Kontaktplatte durch ein beweglich ausgeführtes Element an unterschiedliche Kunststoffprofile anpassbar, ohne dass ein Austausch der gesamten oder eines Teils der Kontaktplatte erforderlich ist. Das beweglich ausgeführte Element kann über einen Einstellmechanismus in seiner Position verändert werden. Durch die Veränderung der Position des beweglich ausgeführten Elementes kann die Form und die Position der Ausnehmung in der Kontaktplatte variiert werden. Als Einstellmechanismus kann beispielsweise eine Gewindespindel vorgesehen werden, die mithilfe eines Steckschlüssels betätigt wird. Selbstverständlich können auch mehrere beweglich ausgeführte Elemente vorgesehen werden, um eine noch flexiblere Anpassung der Ausnehmung oder der Ausnehmungen zu ermöglichen.

Die Aufgabe der Erfindung wird ebenfalls durch eine Vorrichtung zum Verschweißen von Kunststoffprofilen nach Anspruch 4 gelöst.

Eine erfindungsgemäße Vorrichtung basiert auf einer Schweißvorrichtung oder einem Schweißaggregat nach dem Stand der Technik. Die erfindungsgemäße Vorrichtung baut auf einer Grundplatte auf, an welchem die anderen Bauteile der Vorrichtung fest oder beweglich angebracht sind. Die Vorrichtung ist dazu vorgesehen, Kunststoffprofile zu Rahmen, insbesondere zu Rahmen für Fenster oder Türen, zu verschweißen. Die Kunststoffprofile werden in Halteelemente eingespannt, welche sie während dem Verschweißen und während der anderen Bearbeitungsschritte halten. Eine erfindungsgemäße Vorrichtung weist zumindest zwei solche Halteelemente auf. Eine erfindungsgemäße Vorrichtung kann jedoch auch mehrere Halteelemente aufweisen. Ebenso ist es möglich zwei oder mehrere erfindungsgemäße Vorrichtungen zu einem Schweißautomaten zu kombinieren. Die Halteelemente sind dabei beweglich zur Grundplatte ausgeführt. Diese Beweglichkeit wird dazu benötigt, die Kunststoffprofile für die Bearbeitungsschritte mit dem Bearbeitungswerkzeug und dem Heizelement zuzustellen und auszurichten. Weiterhin wird die Beweglichkeit benötigt, um die Kunststoffprofile letztendlich beim Verschweißen zusammenzudrücken. Eine erfindungsgemäße Vorrichtung umfasst weiterhin ein Bearbeitungswerkzeug, welches dazu vorgesehen ist, Material an dem Kunststoffprofil oder den Kunststoffprofilen zu entfernen. Beispielsweise kann das Bearbeitungswerkzeug als Fräswerkzeug ausgeführt sein, welches spanend Teilbereiche der Stirnseite der Kunststoffprofile entfernt. Das Bearbeitungswerkzeug ist dazu vorgesehen, vor dem Verschweißen der Kunststoffprofile Teilbereiche der Stirnseite zu entfernen und somit der Bildung von Schweißwülsten entgegenzuwirken. Ein solches Entfernen von Material wird günstiger Weise dort vorgenommen, wo später, nach dem Verschweißen, Sichtflächen der Kunststoffprofile bzw. des Rahmens vorliegen.

Eine erfindungsgemäße Vorrichtung umfasst weiterhin zumindest ein Heizelement nach einer der zuvor beschriebenen Ausführungsformen. Besonders vorteilhaft an einer erfindungsgemäßen Vorrichtung ist das Zusammenspiel zwischen dem Bearbeitungswerkzeug und dem erfindungsgemäßen Heizelement. Eine signifikante Verbesserung der Oberflächenqualität und des Erscheinungsbildes einer Verbindungsstelle zwischen zwei verschweißten Kunststoffprofilen kann dadurch erreicht werden, dass zunächst mit einem Bearbeitungswerkzeug ein Teil der zu verschweißen Fläche an der Stirnseite der Kunststoffprofile entfernt und anschließend diese bearbeitete Stirnseite selektiv, d.h. nur bereichsweise durch ein erfindungsgemäßes Heizelement erwärmt wird. Beim abschließenden Schweißvorgang entsteht dann kein ungewollter Schweißwulst, da im Sichtbereich kein Material mehr vorhanden ist, welches nach außen quellen kann. Gleichzeitig bleiben die Sichtflächen aufgrund der dort sehr viel geringeren Erwärmung durch das erfindungsgemäße Heizelement in einem festen Zustand und werden so beim Aneinanderdrücken nicht verformt.

Des Weiteren ist in dem Vorschlag vorteilhafter Weise vorgesehen, dass das Bearbeitungswerkzeug als Fräswerkzeug ausgeführt ist, wobei das Bearbeitungswerkzeug zwischen einer Parkposition und eine Arbeitsposition beweglich ausgeführt ist. Ein Fräswerkzeug ist besonders geeignet als Bearbeitungswerkzeug, da durch Fräsen Material schnell und maß genau von den Kunststoffprofilen entfernt werden kann. Das Bearbeitungswerkzeug kann jedoch auch andersartig ausgeführt sein. Generell sind alle Technologien für ein Bearbeitungswerkzeug geeignet, die eine selektive Entfernung von Material an der Stirnseite oder angrenzend an die Stirnseite von Kunststoffprofilen ermöglichen. Beispielsweise kann ein Laser zur Entfernung von Material eingesetzt werden. Ein Laser hat zusätzlich den Vorteil, dass beim Abtrag von Material bereits Wärme in das Kunststoffprofil eingebracht wird, welche im nächsten Schritt zur Erwärmung oder zur Plastifizierung des Kunststoffprofiles eingesetzt werden kann. Darüber hinaus kann das Bearbeitungswerkzeug auch durch ein einfaches Messer, ein Schleifenwerkzeug, ein Stechwerkzeug oder ein Zangenwerkzeug gebildet werden. Unter Parkposition ist eine Position zu verstehen, in die das Bearbeitungswerkzeug gelegt wird, solange es nicht zur Entfernung von Material am Kunststoffprofil eingesetzt wird. Die Parkposition ist so gewählt, dass das Bearbeitungswerkzeug in dieser Position die anderen Komponenten der Vorrichtung nicht in ihrer Beweglichkeit behindert. Unter Arbeitsposition ist der Bereich zu verstehen, in dem sich das Bearbeitungswerkzeug beim Entfernen von Material am Kunststoffprofil befindet. Die Arbeitsposition ist somit nicht eine einzige Position, sondern ein Arbeitsbereich.

Bei einer bevorzugten Ausgestaltung des Vorschlags ist vorgesehen, dass das Bearbeitungswerkzeug zumindest einen Stirnplanfräser umfasst und das Bearbeitungswerkzeug in der Arbeitsposition entlang zumindest zweier Raumachsen bewegbar ist, so dass das Bearbeitungswerkzeug dazu geeignet ist, entlang des gesamten Umfangs zumindest eines Kunststoffprofiles Material zu entfernen. In dieser Ausführungsform umfasst das Bearbeitungswerkzeug zumindest einen Stirnplanfräser, welcher Material am Kunststoffprofil entfernt. Ein Stirnplanfräser ermöglicht gleichzeitig ein Glätten und Planen der gesamten Stirnseite des Kunststoffprofiles und zusätzlich die selektive Entfernung von Material im Randbereich der Stirnfläche. Für diese selektive Entfernung im Randbereich wird das Bearbeitungswerkzeug um den stirnseitigen Umfang des Kunststoffprofiles herum bewegt. Dies wird dadurch ermöglicht, dass das Bearbeitungswerkzeug in seiner Arbeitsposition entlang zumindest zwei aufeinander senkrecht stehenden Raumachsen beweglich ausgeführt ist. Das Bearbeitungswerkzeug umfasst in dieser Ausführungsform auch die für diese Beweglichkeit erforderlichen Führungen und Antriebe.

Des Weiteren ist vorgesehen, dass das Heizelement in seiner Ruheposition von anderen Komponenten der Vorrichtung beabstandet und gut für einen Bediener zugänglich angeordnet ist, wodurch ein Auswechseln oder eine Reinigung der Kontaktplatte in der Ruheposition möglich ist. Im Betrieb der Vorrichtung kann es vorkommen, dass am Heizelement durch das Erwärmen der Kunststoffprofile Kunststoffreste verbleiben, welche das Heizelement verschmutzen. In diesem Fall muss das Heizelement von Zeit zu Zeit gereinigt werden. Darüber hinaus muss meist zur Anpassung der Vorrichtung an die Verarbeitung an ein unterschiedliches Kunststoffprofil die Kontaktplatte des Heizelementes ausgewechselt werden. Sowohl für die Reinigung als auch für das Auswechseln der Kontaktplatte muss das Heizelement zumindest in seiner Ruheposition für einen Bearbeiter oder Maschinenbediener gut zugänglich und erreichbar sein. Dies kann dadurch erreicht werden, dass die Ruheposition des Heizelementes beabstandet von anderen Komponenten der Vorrichtung angeordnet ist. Ein günstiger Abstand liegt im Bereich von wenigen Zentimetern, beispielsweise im Bereich von 2-15 cm. Dieser Abstand ist geeignet, um die Kontaktplatte des Heizelementes mit der Hand erreichen zu können. Je größer der Abstand gewählt wird, desto ergonomischer kann die Vorrichtung bedient werden.

In einer vorteilhaften Ausgestaltung ist vorgesehen, dass eine Temperaturwarnvorrichtung vorgesehen ist, welche zumindest in der Ruheposition des Heizelementes die Temperatur der Kontaktplatte misst und bei einer Temperatur, die bei Berührung der Kontaktplatte durch einen Bediener Verletzungen hervorruft, ein Warnsignal ausgibt. In dieser Ausführungsform ist eine Warnvorrichtung vorgesehen, die den Bediener vor Verbrennungen schützen soll. Das Heizelement weist im Betrieb der Vorrichtung üblicherweise eine Temperatur von mehr als 100 °C auf. Somit besteht beim Berühren des Heizelementes mit bloßer Hand erhebliche Verbrennungsgefahr. Die Temperaturwarnvorrichtung misst kontinuierlich die Temperatur des Heizelementes und damit der Kontaktplatte. Liegt diese gemessene Temperatur in einem Bereich, in dem Verletzungen erzeugt werden können, wird ein Warnsignal ausgegeben. Dieses Warnsignal kann optisch oder akustisch sein. Weiterhin kann eine Absperrung an der Vorrichtung vorgesehen werden, welche die warmen oder heißen Teile des Heizelementes physisch vor Zugriff sichert, solange sich deren Temperatur in einem Bereich befindet, in dem Verletzungen auftreten können.

Die Aufgabe der Erfindung wird ebenfalls durch ein Verfahren zum Verschweißen von Kunststoffprofilen nach Anspruch 7 gelöst.

Das erfindungsgemäße Verfahren wird bevorzugt mithilfe einer erfindungsgemäßen Vorrichtung durchgeführt. Das Verfahren kann jedoch auch mit anderen Hilfsmitteln oder Werkzeugen durchgeführt werden. Zunächst werden die zu verschweißenden Kunststoffprofile gesägt, wobei die Abmessungen der gesetzten Kunststoffprofile etwas größer sind als die geforderten Endabmessungen für den herzustellenden Rahmen. Anschließend werden im Verfahrensschritt A die Kunststoffprofile eingespannt, d. h. an der für das Verfahren verwendeten Vorrichtung fixiert. Die Einspannung erfolgt günstiger Weise in den beweglich ausgeführten Halteelementen einer erfindungsgemäßen Vorrichtung. In Verfahrensschritt B wird anschließend ein Teil der Stirnflächen der Kunststoffprofile durch ein Bearbeitungswerkzeug entfernt. Dabei kann zunächst über die gesamte Stirnfläche Material entfernt werden, wodurch die sägeraue Oberfläche der Kunststoffprofile geglättet und in den, für die Verschweißung erforderlichen Winkel gebracht wird. Anschließend wird durch das Bearbeitungswerkzeug im Umfangsbereich der Kunststoffprofile zusätzlich Material entfernt, insbesondere dort, wo nach dem Verschweißen Sichtflächen angeordnet sind. Durch Entfernen von Material in diesen Bereichen wird das Entstehen eines Schweißwulstes nach dem Verschweißen dort verhindert. Nach dem Entfernen von Material in Schritt B wird im darauffolgenden Verfahrensschritt C ein Aufschmelzen oder Plastifizieren zumindest eines Teils der Stirnseiten oder Stirnflächen der Kunststoffprofile vorgenommen. Dabei werden lediglich die Bereiche der Stirnseite der Kunststoffprofile aufgeschmolzen, die nach dem Entfernen B von Teilen der Stirnfläche durch das Bearbeitungswerkzeug verbleiben. Zum Aufschmelzen C wird ein erfindungsgemäßes Heizelement verwendet, welches zumindest eine Ausnehmung in jeder Kontaktfläche aufweist. Für das Aufschmelzen C sind an dem Heizelement zwei Kontaktplatten angeordnet, von denen jeweils eine mit einer Stirnseite eines zu verschweißenden Kunststoffprofils in Kontakt gebracht wird. Dieses In-Kontakt-Bringen wird dadurch erreicht, dass die Kunststoffprofile mithilfe der beweglich gelagerten Halteelemente in einer bestimmten Position an das Heizelement und die Kontaktplatten gedrückt werden. Diese Position ist so gewählt, dass die Ausnehmungen in den Kontaktflächen zumindest teilweise den beim Entfernen B bearbeiteten Bereichen der Kunststoffprofile gegenüberliegen. Dadurch wird erreicht, dass die bearbeiteten Bereiche, in denen Material entfernt wurde, beanstandet vom Heizelement verbleiben und somit weniger oder gar nicht erwärmt werden. Dies hat den bereits zuvor beschriebenen Effekt, dass das Material in diesen Bereichen, wo Material entfernt wurde, fest und formstabil verbleibt, wogegen das Material, welches an der Kontaktfläche des Heizelements anliegt, für die Verschweißung plastifiziert wird. Beim Aufschmelzen C wird somit nur lokal und selektiv aufgeschmolzen, manche Bereiche der Stirnseite der Kunststoffprofile werden dabei nicht aufgeschmolzen.

Schließlich werden im Verfahrensschritt D die selektiv aufgeschmolzenen Stirnseiten der Kunststoffprofile aneinandergedrückt, wodurch das eigentliche Verschweißen der beiden Profile erfolgt. Das Zusammen- oder Aneinanderdrücken wird dabei bevorzugt durch eine Bewegung der Halteelemente vorgenommen, in denen die Kunststoffprofile eingespannt sind. Nach dem Zusammendrücken und Abkühlen liefert ein erfindungsgemäßes Verfahren eine Schweißverbindung zwischen zwei Kunststoffprofilen, welche keinen Schweißwulst aufweist. Gleichzeitig ist die Oberflächenqualität, insbesondere Ebenheit und ein optisch gutes Erscheinungsbild an den Stoßstellen, zwischen den beiden Profilen deutlich besser als beim Stand der Technik.

Bevorzugt wird das erfindungsgemäße Verfahren genau in der beschriebenen Reihenfolge der Verfahrensschritte, alphabetisch geordnet von A bis D durchgeführt.

Des Weiteren ist vorgesehen, dass in Verfahrensschritt C Aufschmelzen die verbleibende Stirnfläche der Kunststoffprofile eine Breite aufweist und die Kontaktflächen des Heizelementes zumindest zwei Ausnehmungen aufweisen, die in einem Abstand zueinander angeordnet sind, wobei die Breite dem Abstand entspricht und beim Aufschmelzen C die Breite deckungsgleich zum Abstand positioniert wird. In dieser Ausführungsform weist die nach dem Entfernen von Material in Schritt B verbleibende Stirnfläche der Kunststoffprofile eine Breite auf. Diese Breite ist selbstverständlich nicht nur auf eine Raumrichtung beschränkt, es können auch mehrere Breiten in verschiedenen Raumrichtungen verbleiben. Unter Breite ist diejenige Abmessung zu verstehen, die die Entfernung zwischen den Rändern der verbleibenden Stirnfläche definiert. In verschiedenen Richtungen können somit auch unterschiedlich große Breiten nach dem Entfernen von Material verbleiben. Die Kontaktflächen des Heizelementes weisen zumindest zwei Ausnehmungen auf, die die Kontaktfläche unterbrechen und die in einem Abstand zueinander angeordnet sind. Dieser Abstand zwischen den Ausnehmungen ist genauso gewählt, dass er der jeweiligen Breite der Stirnfläche der Kunststoffprofile entspricht. Beim Andrücken der Kunststoffprofile an die Kontaktflächen gerät die verbleibende Stirnfläche in Berührung mit der durch den Abstand definierten Oberfläche des Halteelementes zwischen zwei Ausnehmungen. Der Abstand wird dazu beim Verfahrensschritt C deckungsgleich zur Breite ausgerichtet. Für diese Ausrichtung oder Positionierung kann entweder das Heizelement entsprechend zu den Kunststoffprofilen hinbewegt oder in Umkehr die Kunststoffprofile, bevorzugt eingespannt in den Halteelementen, entsprechend zum Heizelement hin bewegt werden. Diese Positionierung zwischen Breite und Abstand kann bei Verwendung einer erfindungsgemäßen Vorrichtung beispielsweise durch eine Feineinstellung der Schweißposition des Halteelementes vorgenommen werden.

In einer vorteilhaften Ausgestaltung ist vorgesehen, dass in Verfahrensschritt C Aufschmelzen die verbleibende Stirnfläche der Kunststoffprofile eine Breite aufweist und die Kontaktflächen des Heizelementes zumindest zwei Ausnehmungen aufweisen, die in einem Abstand zueinander angeordnet sind, wobei die Breite kleiner als der Abstand ist und beim Aufschmelzen C der Abstand so positioniert wird, dass er die Breite komplett überdeckt. Auch in dieser Ausführungsform weist die verbleibende Stirnfläche der Kunststoffprofile eine Breite auf. Für diese Breite gilt das zu der vorhergehenden Ausführungsform Beschriebene. Die Kontaktflächen weisen auch hier zumindest zwei Ausnehmungen auf, zwischen denen ein Abstand besteht. Auch für diesen Abstand gilt die Erklärung zu der zuvor beschriebenen Ausführungsform. In dieser alternativen Ausführungsform des Verfahrens ist jedoch der Abstand zwischen den Ausnehmungen größer gewählt als die Breite der verbleibenden Standfläche. Dadurch wird beim Aufschmelzen C die Gefahr minimiert, dass Breite und Abstand sich nicht genau überdecken und nicht der gesamte Bereich der verbleibenden Standfläche über dessen gesamte Breite aufgeschmolzen wird. Bei einem größeren Abstand wird dieser so zur Breite positioniert, dass er an beiden Seiten über die Breite hinaussteht und diese somit überdeckt. Durch diese Wahl der Abmessungen können Toleranzen bei der Bearbeitung der Profile und leichte Fehlpositionierungen beim Ausrichten der Kunststoffprofile zum Heizelement und umgekehrt ausgeglichen werden.

Geschickter Weise ist vorgesehen, dass in Verfahrensschritt C Aufschmelzen die verbleibende Stirnfläche der Kunststoffprofile eine Breite aufweist und die Kontaktflächen des Heizelementes zumindest zwei Ausnehmungen aufweisen, die in einem Abstand zueinander angeordnet sind, wobei die Breite größer als der Abstand ist und beim Aufschmelzen C der Abstand so positioniert wird, dass er innerhalb der Breite am Kunststoffprofil aufliegt. Auch bei dieser alternativen Ausführungsform des Verfahrens ist die verbleibende Breite der Kunststoffprofile nach der Entfernung von Material und der Abstand zwischen zumindest zwei Ausnehmungen am Heizelement definiert wie in den beiden zuvor beschriebenen Ausführungsformen. Alternativ ist nun jedoch der Abstand zwischen zwei Ausnehmungen kleiner gewählt als die verbleibende Breite der Stirnfläche der Kunststoffprofile. Dadurch liegt die Kontaktfläche des Halteelementes nicht mehr auf der gesamten verbleibenden Stirnfläche mit der definierten Breite an. Im Verfahrensschritt C werden somit Randbereiche der verbleibenden Stirnfläche nicht mehr von der Kontaktfläche berührt und somit nicht direkt aufgeschmolzen. In diesen Randbereichen verbleibt ein nicht völlig plastifizierter Bereich an Material. Dieser verbleibende Bereich stört auch beim anschließenden Verschweißen oder Zusammendrücken nicht, da dieser Bereich zumindest aufgeweicht ist und sich beim Zusammendrücken entsprechend verformen lässt. Alternativ kann der verbleibende Bereich auch, wie weiter unten beschrieben, in einem zusätzlichen, vor dem Zusammendrücken durchgeführten Verfahrensschritt wieder entfernt werden. Vorteilhaft an dieser Ausführungsform, bei der der Abstand geringer als die Breite gewählt ist, ist, dass die Distanz zwischen dem aufgeschmolzenen Bereich zur außen am Rand der Kunststoffprofile angeordneten Sichtbereich noch größer ist als bei den zuvor beschriebenen Ausführungsformen. Dadurch wird der Außenumfang der Kunststoffprofile angeordnete Sichtbereich in noch geringerem Ausmaß erwärmt und verbleibt somit noch formstabiler. Dadurch kann die Oberflächenqualität im Sichtbereich der Schweißverbindung nochmals verbessert werden.

In einer weiteren bevorzugten Ausführungsform ist vorgesehen, dass nach dem Aufschmelzen C und vor dem Zusammendrücken D folgende zusätzliche Schritte durchgeführt werden:
B2. erneutes Entfernen eines Teils einer Stirnfläche der Kunststoffprofile und/oder zumindest teilweises Entfernen von durch das Aufschmelzen C verdrängtem Material von den Kunststoffprofilen durch ein Bearbeitungswerkzeug,
C2. erneutes Aufschmelzen der nach dem Entfernen B2 verbleibenden Stirnflächen der Kunststoffprofile durch In-Kontakt-Bringen mit einem Heizelement nach einer der zuvor beschriebenen Ausführungsformen, wobei die Ausnehmungen der Kontaktflächen des Heizelementes so zu der Stirnseite positioniert werden, dass die Ausnehmungen den durch das Entfernen B2 bearbeiteten Bereichen der Kunststoffprofile gegenüberliegen.

In dieser Ausführungsform werden zusätzlich zwei weitere Verfahrensschritte B2 und C2 nach dem Aufschmelzen C und vor dem Zusammendrücken D durchgeführt. Beim Aufschmelzen C werden die Stirnseiten der Kunststoffprofile gegen das Heizelement gedrückt, wobei das aufliegende Material an der Kontaktfläche plastifiziert wird. Dabei wird bereits aufgeschmolzenes Material nach außen verdrängt. Dadurch wird die Kontaktfläche der Kunststoffprofile gegenüber einen nicht aufgeschmolzenen Zustand vergrößert, was günstig für eine spätere, stabile Schweißverbindung ist. Nachteilig ist jedoch, dass Material auch in die Bereiche verdrängt wird, in denen später Sichtflächen vorliegen. Aus diesem Grund wird in der beschriebenen alternativen Ausführungsform des Verfahrens zunächst ein erstes Mal aufgeschmolzen, im Verfahrensschritt C, und anschließend mit dem Bearbeitungswerkzeug erneut ein Teil der Stirnfläche der Kunststoffprofile entfernt. Bevorzugt wird dabei das beim ersten Anschmelzen C in Richtung des Sichtbereiches verdrängte Material wieder entfernt. Das verwendete Material an anderen Bereichen wird hierbei jedoch nicht entfernt, wodurch die Größe der Oberfläche der Stirnseite der Kunststoffprofile nach dem zweiten Entfernungsschritt größer ist als nach dem ersten Entfernen B. Nach dem erneuten Entfernen B2 wird analog zum ersten Entfernen B ein zweites Mal aufgeschmolzen, nämlich im Verfahrensschritt C2. Das erneute Aufschmelzen C2 wird analog zum Aufschmelzen C durchgeführt und das Heizelement zu den Stirnflächen der Kunststoffprofile entsprechend positioniert. Durch das Einschieben der beiden optionalen Verfahrensschritte B2 und C2 wird die verschweißte Fläche zwischen den beiden Kunststoffprofilen vergrößert und somit die Festigkeit der Schweißverbindung verbessert. Gleichzeitig bleiben jedoch die Vorteile des erfindungsgemäßen Verfahrens bezüglich einer deutlich verbesserten Oberflächenqualität erhalten. Selbstverständlich können auch noch weitere, analog gestaltete Zwischenschritte des Aufschmelzens und Entfernens hinzugefügt werden. So ist es beispielsweise möglich, insgesamt drei Schritte des Aufschmelzens und drei Schritte des Entfernens hintereinander durchzuführen, bevor die Kunststoffprofile zusammengedrückt und verschweißt werden.

Des Weiteren ist vorgesehen, dass nach dem Aufschmelzen C und vor dem Zusammendrücken D folgender zusätzlicher Schritt durchgeführt wird:
B2. erneutes Entfernen eines Teils einer Stirnfläche der Kunststoffprofile und/oder zumindest teilweises Entfernen von durch das Aufschmelzen C verdrängtem Material von den Kunststoffprofilen durch ein Bearbeitungswerkzeug.

In dieser Ausführungsform des Verfahrens wird lediglich ein Zwischenschritt B2 zwischen dem Aufschmelzen C und dem Zusammendrücken D durchgeführt. Nach dem Aufschmelzen C sind die Bereiche der Kunststoffprofile, in denen eine Berührung zwischen der Stirnseite und der Kontaktfläche erfolgte, erweicht oder plastifiziert. Dabei wurde auch bereits Material verdrängt, meist auch in die Bereiche, in denen später nach dem Zusammendrücken D eine Sichtfläche entstehen soll. Bei dieser Ausführungsform des Verfahrens wird in dem noch erwärmten Zustand nach dem Aufschmelzen C erneut Material im Bereich der Stirnflächen der Kunststoffprofile durch ein Bearbeitungswerkzeug entfernt. Bevorzugt wird dabei nur das Material entfernt, welches in den Bereich der Sichtfläche verdrängt wurde. Dieses erneute Entfernen von Material B2 wird durchgeführt, solange sich das Material noch in einem erweichten oder plastifizierten Zustand befindet. Eine solche Entfernung von erweichtem Material ist beispielsweise mit einem als Fräswerkzeug ausgeführten Bearbeitungswerkzeug möglich. Dieses erneute Entfernen von Material B2 wird dabei zügig durchgeführt, sodass das Material beim Entfernen nicht wesentlich abkühlt und in dem erweichten Zustand verbleibt. Nach dem erneuten Entfernen von Material B2 werden die Stirnseiten der Kunststoffprofile dann ohne erneutes Aufschmelzen zusammengedrückt und verschweißt. Zu diesem Zeitpunkt befindet sich das Material im Bereich der Stirnflächen immer noch in einem erweichten, plastifizierten Zustand. Auf diese Weise kann die Oberflächenqualität in den Sichtbereichen durch das erneute Entfernen von Material verbessert werden und gleichzeitig wird die Prozesszeit für das Verschweißen der Kunststoffprofile nur unwesentlich, nämlich um den zweiten Entfernungsschritt B2, verlängert. Ein zweiter Schritt des Aufschmelzens nach dem zweiten Entfernungsschritt B2 wird in dieser Ausführungsform des Verfahrens nicht benötigt.

In diesem Zusammenhang wird insbesondere darauf hingewiesen, dass alle im Bezug auf die Vorrichtung beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche berücksichtigt und beansprucht werden und zählen ebenfalls zur Offenbarung.

In den Zeichnungen ist die Erfindung in Ausführungsbeispielen schematisch dargestellt. Es zeigen:
- Fig. 1: eine perspektivische Ansicht eines erfindungsgemäßen Heizelementes mit einem mit der Kontaktplatte in Berührung stehenden Kunststoffprofil,
- Fig. 2: eine perspektivische Ansicht eines erfindungsgemäßes Heizelement ohne Kunststoffprofil,
- Fig. 3: eine perspektivische Ansicht einer erfindungsgemäßen Vorrichtung,
- Fig. 4: eine schematische Darstellung eines zu einem erfindungsgemäßen Heizelement positionierten Kunststoffprofils,
- Fig. 5: in den Ansichten 5a und 5b die unterschiedlichen Ergebnisse des Anschmelzens bei unterschiedlichen Abständen von Ausnehmungen im Heizelement,
- Fig. 6: in den Ansichten 6a bis 6f schematische Darstellungen von Verfahrensschritten beim Verschweißen von Kunststoffprofilen,
- Fig. 7: eine perspektivische Ansicht einer erfindungsgemäßen Vorrichtung mit weiteren Komponenten einer Schweißmaschine,
- Fig. 8: eine perspektivische Ansicht einer erfindungsgemäßen Vorrichtung mit einem Heizelement in Schweißposition und in Ruheposition.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

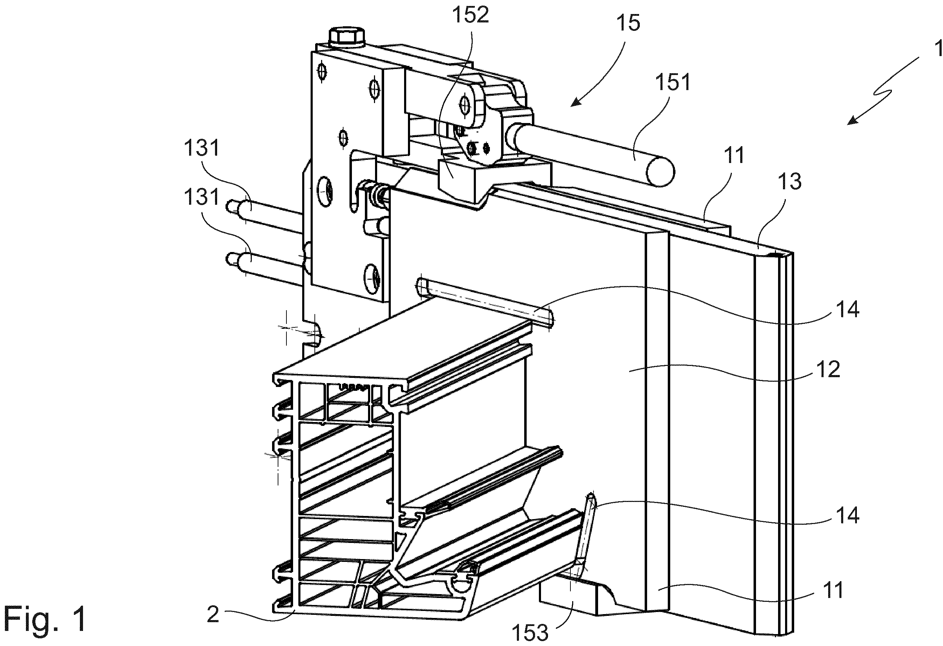

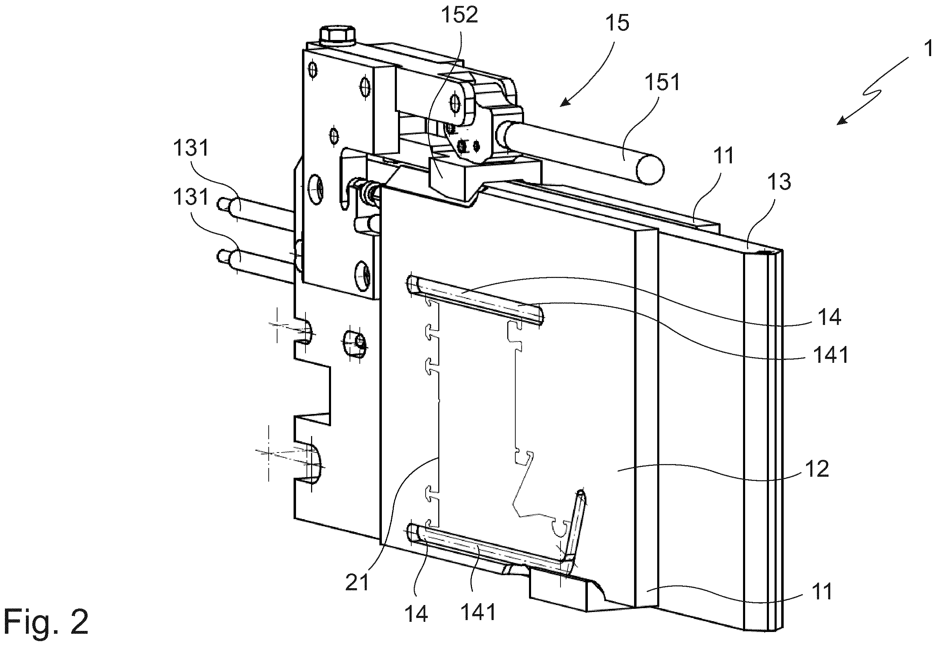

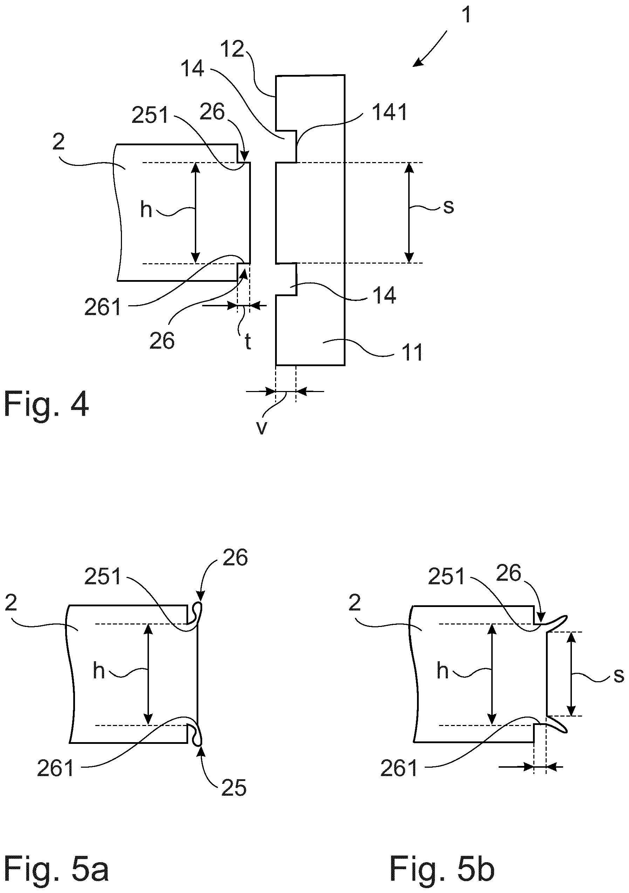

Fig. 1 zeigt eine perspektivische Ansicht eines erfindungsgemäßen Heizelementes 1 mit einem mit der Kontaktplatte in Berührung stehenden Kunststoffprofil 2. In der Darstellung ist ein Kunststoffprofil 2 so zum Heizelement 1 positioniert, dass ein Bereich der Stirnfläche des Kunststoffprofils 2 in Berührung mit dem Heizelement 1 kommt. In der dargestellten Position wird das Kunststoffprofil 2 von Heizelement 1 gemäß dem erfindungsgemäßen Verfahren erwärmt bzw. plastifiziert. Die in den Fig. 4, 5 und 6 dargestellten Bereiche, an denen an der Stirnseite des Kunststoffprofils 2 Material entfernt wurde, wie beispielsweise in den Abtragungen 25, 26, sind in Fig. 1 der Übersichtlichkeit halber nicht dargestellt. Selbstverständlich können aber auch Kunststoffprofile 2 mit an der Stirnseite entferntem Material, wie durch die Abtragungen in Fig. 4, 5 und 6 dargestellt, entsprechend der Darstellung in Fig. 1 an das Heizelement 1 herangeführt und mit diesem in Berührung gebracht werden. Weitere Bauteile oder Baugruppen, welche für die praktische Positionierung des Kunststoffprofils 2 zum Heizelement 1 benötigt werden, sind in dieser Ansicht der Übersichtlichkeit halber nicht dargestellt. Das Heizelement 1 weist ein zentral oder mittig angeordnetes Erwärmungselement 13 auf. Auf beiden Seiten des plattenförmig ausgeführten Erwärmungselementes 13 ist jeweils eine Kontaktplatte 11 angeordnet. Auch die Kontaktplatten 11 sind plattenförmig ausgeführt. Die Kontaktplatten 11 liegen mit ihrer Rückseite flächig am Erwärmungselement 13 auf, wodurch ein guter Wärmeübergang vom Erwärmungselement 13 zu den Kontaktplatten 11 sichergestellt ist. In der in der Darstellung nach vorne orientierten Kontaktplatte 11 sind zwei Ausnehmungen 14 eingefräst. Auf diese Ausnehmungen 14 wird in Zusammenhang mit Figur 2 näher eingegangen. Das Erwärmungselement 13 weist nach links hinten orientiert zwei Anschlüsse 131 auf, welche zur Versorgung des Erwärmungselementes 13 mit Energie dienen. Dabei kann das Erwärmungselement 13 beispielsweise direkt mit elektrischer Energie erhitzt werden. Alternativ ist es aber auch möglich, über die Anschlüsse 131 ein flüssiges Heizmittel, wie beispielsweise heißes Wasser oder Öl dem Erwärmungselement 13 zuzuführen und dieses so zu erwärmen. In der Darstellung ist am oberen Rand des Erwärmungselementes 13 angeordnet das Verbindungselement 15 zu sehen. Dieses Verbindungselement 15 dient dazu, die Kontaktplatten 11 lösbar fest mit dem Erwärmungselement 13 zu verbinden. Das Druckstück 152 ist mit dem Betätigungshebel 151 verbunden. Im dargestellten Zustand befindet sich das Druckstück 152 in einer zum Erwärmungselement 13 in bewegter Position. Im dargestellten Zustand umschließt das Druckstück 152 formkomplementär einen Teil des oberen Randes der Kontaktplatten 11 und drückt diese dadurch an das Erwärmungselement 13. Ein Teil des oberen Randes der Kontaktplatten 11 ist abgeschrägt bzw. mit einer Fase versehen. Das Druckstück 152 weist auf seiner nach unten gewandten Seite entsprechende mit einer Fase versehene Bereiche auf. Das Druckstück 152 liegt mit seinen mit einer Fase versehenen Bereichen auf den mit Fasen versehenen Bereichen der Kontaktplatten 11 auf. Durch die in einem Winkel von ca. 45° zur Seitenfläche des Erwärmungselementes 13 ausgerichteten Fasen entsteht beim vertikalen Aufdrücken des Druckstückes 152 auf die Kontaktplatten 11 aufgrund der Keilwirkung eine Kraft, die die Kontaktplatten 11 fest an die Oberflächen des Erwärmungselementes 13 drückt. Um die Kontaktplatten 11 vom Erwärmungselement 13 zu trennen, wird der Betätigungshebel 151 nach oben bewegt. Dadurch wird auch das Druckstück 152 vom Erwärmungselement 13 und den Kontaktplatten 11 wegbewegt. Der Formschluss zwischen den Teilen wird dabei aufgehoben, sodass die Kontaktplatten 11 dann vom Erwärmungselement 13 entfernt werden können. Das Verbindungselement 15 umfasst weiterhin einen unteren Rand des Erwärmungselementes 13 angeordnetes Haltestück 153. Bei der Verbindung der Kontaktplatten 11 mit dem Erwärmungselement 13 durch das Verbindungselement 15 wird zunächst der untere Rand der Kontaktplatten in das Haltestück 153 eingeführt. Anschließend wird der Betätigungshebel 151 und das Druckstück 152 nach unten positioniert, wodurch ein Formschluss und ein Kraftschluss zwischen den Kontaktplatten 11 und dem Erwärmungselement 13 entsteht. Auch das Haltestück 153 weist Bereiche mit einer Fase auf, wobei die Fase hier nach oben orientiert ist und als Einführhilfe für die Kontaktplatten 11 dient. Das Haltestück 153 ist dauerhaft fest mit dem Erwärmungselement 13 verbunden.

Fig. 2 zeigt eine perspektivische Ansicht eines erfindungsgemäßen Heizelementes 1 ohne Kunststoffprofil 2. In Fig. 2 ist das Heizelement 1 aus Fig. 1 ohne ein Kunststoffprofil 2 dargestellt. Das Heizelement 1 in Fig. 2 entspricht dem Heizelement 1 in Fig. 1, so dass die Beschreibung zum Heizelement 1 aus Fig. 1 auch für Fig. 2 gilt. In Fig. 2 ist die nach vorne gewandte Kontaktplatte 11 nicht von einem Kunststoffprofil 2 verdeckt und somit in allen Details zu erkennen. Nach vorne gewandt ist die Kontaktfläche 12 der vorderen Kontaktplatte 11. Die Kontaktfläche 12 weist hier eine homogene, glatte Oberfläche auf. In einer alternativen Ausführungsform kann die Kontaktfläche 12 jedoch auch eine regelmäßige Kontur aufweisen, beispielsweise regelmäßig angeordnete Rippen. Solche Rippen können zur Vergrößerung der Kontaktfläche 12 eingesetzt werden. Die Kontaktfläche 12 ist dazu vorgesehen, mit einem Kunststoffprofil, insbesondere mit der Stirnseite eines Kunststoffprofils in Berührung oder Kontakt zu kommen. Auf der Kontaktfläche 12 ist die Außenkontur 21 der Stirnseite eines Kunststoffprofils 2 eingezeichnet. Diese Außenkontur 21 ist eine nur in der Darstellung eingezeichnete Hilfslinie um das Verständnis der folgenden Beschreibung zu erleichtern. Die Kontaktfläche 12 ist homogen und glatt ausgeführt, die Außenkontur 21 ist in Realität nicht vorhanden oder zu sehen. In der Kontaktfläche 12 sind zwei Ausnehmungen 14 angeordnet, eine im oberen Bereich der Kontaktfläche 12 und eine in der Nähe des unteren Randes. Im dargestellten Fall sind die beiden Ausnehmungen 14 taschenförmig ausgeführt und werden auf ihrer der Kontaktfläche 12 abgewandten Seite durch jeweils eine Bodenfläche 141 begrenzt. Die Bodenfläche 141 ist gegenüber der Kontaktfläche 12 zurückversetzt und hier ebenfalls plan ausgeführt. Alternativ können die Ausnehmungen 14 auch so ausgeführt sein, dass sie die Kontaktplatte 11 komplett durchdringen und dann keine Bodenfläche 141 aufweisen. Im dargestellten Fall sind die Ausnehmungen 14 aus der Kontaktplatte 11 herausgefräst. In Fig. 1 ist die nach hinten gewandte zweite Kontaktplatte 11 nicht zu erkennen. Diese zweite Kontaktplatte 11 ist bezogen auf die Mittelebene des Erwärmungselementes 13 symmetrisch zu der nach vorne gewandten ersten Kontaktplatte 11 ausgeführt. Somit weist auch die zweite, nach hinten gewandte Kontaktplatte 11 zwei Ausnehmungen 14 auf, die symmetrisch zu den beiden Ausnehmungen 14 in der nach vorne gewandten Kontaktplatte angeordnet sind.

Die beiden Ausnehmungen 14 sind so angeordnet, dass ihre Form und Position teilweise bzw. bereichsweise an die Außenkontur 21 des Kunststoffprofiles angrenzen. Das in Fig. 1 eingezeichnete Kunststoffprofil 2 weist nach oben und nach unten jeweils eine plan ausgeführte Sichtfläche auf. Weiterhin ist eine nach vorne rechts gekrümmte weitere Sichtfläche vorhanden. Die Ausnehmungen 14 sind so geformt, dass deren in Richtung zur Außenkontur 21 gewandte Innenkontur in diesen Bereichen der Sichtflächen der Außenkontur 21 des Kunststoffprofiles entspricht. Durch eine solche Anordnung der Ausnehmungen 14 wird erreicht, dass das Kunststoffprofil 2 im Bereich von dessen Sichtflächen nicht durch die Kontaktplatte 11 erwärmt wird. Der Rest der Stirnseite des Kunststoffprofiles 2, welcher von der Außenkontur 21 umschlossen wird, wird jedoch von der Kontaktplatte 11 berührt und erwärmt. Dadurch, dass die Randbereiche des Kunststoffprofiles 2, dort, wo sich die Sichtflächen befinden, nicht von dem erfindungsgemäßen Heizelement 1 berührt werden, verbleiben eben diese Sichtbereiche in einem festen Zustand, wodurch sich eine deutlich verbesserte Oberflächenqualität der späteren Schweißverbindung ergibt. Selbstverständlich können Ausnehmungen 14 auch noch in anderen Bereichen in der Kontaktplatte 11 angeordnet werden. Die Breite der Ausnehmungen 14, ausgehend von deren der Außenkontur 21 des Profils zugewandten Innenkontur ist so gewählt, dass der Bereich, wo sich die Sichtflächen des Kunststoffprofiles 2 befinden, sicher nicht von der Kontaktplatte 11 berührt werden. Weiterhin wird durch den Abstand auch verhindert, dass sich das Material im Bereich der Sichtflächen berührungslos, beispielsweise durch Wärmestrahlung ausgehend von der Kontaktplatte 11 erwärmt.

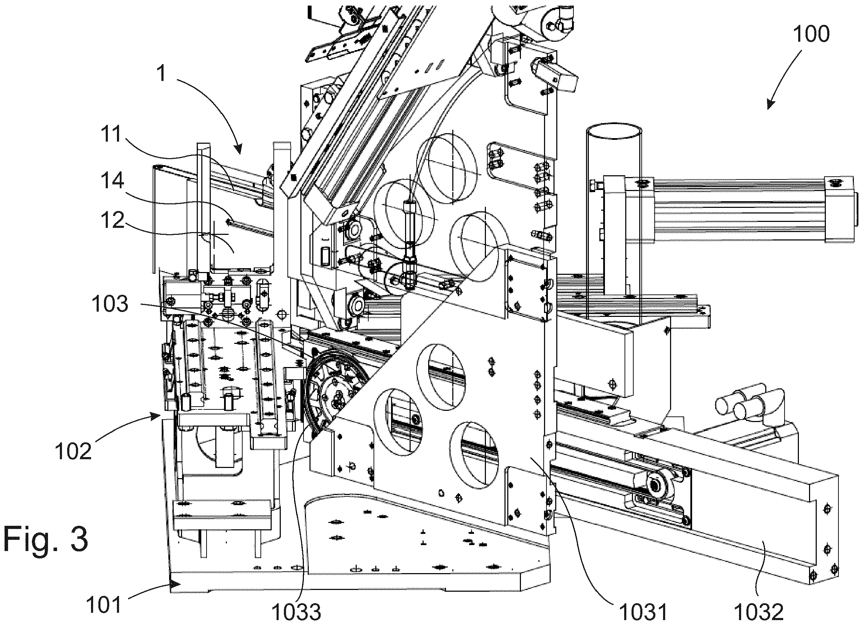

Fig. 3 zeigt eine perspektivische Ansicht einer erfindungsgemäßen Vorrichtung 100. Eine erfindungsgemäße Vorrichtung 100 dient dazu, Kunststoffprofile zur Herstellung von Rahmen, beispielsweise für Türen oder Fenster, zu verschweißen. Die dargestellte Vorrichtung 100 umfasst dazu eine Grundplatte 101, auf dem die weiteren Elemente oder Baugruppen der Vorrichtung 100 angeordnet sind. Im dargestellten Fall wird die Grundplatte 101 durch eine Metallplatte gebildet. Die Grundplatte 101 kann zusätzlich aber auch noch weitere Elemente umfassen, wie beispielsweise ein Befestigungselement, mit welchem die Vorrichtung 100 am Produktionsort oder an einem Maschinengestell verankert wird. Links unten ist eines der beiden Halteelemente 102 zu sehen. Dieses Halteelement 102 dient dazu, Kunststoffprofile 2 für die Verarbeitung einzuspannen. Kunststoffprofile 2 sind in dieser Ansicht der Übersichtlichkeit halber nicht dargestellt. Das Halteelement 102 ist beweglich ausgeführt und kann mit einem darin eingespannten Kunststoffprofil 2 den Arbeitsschritten zugeführt werden. In der dargestellten Ausführungsform umfasst das Halteelement 102 zwei vertikal übereinander angeordnete Platten, zwischen die ein Kunststoffprofil 2 eingespannt werden kann. In der dargestellten Ausführungsform ist das Halteelement 102 von vorne nach hinten, in die Zeichnungsebene hinein, beweglich ausgeführt. Durch diese bewegliche Ausführung kann das Halteelement 102 mit dem Kunststoffprofil beispielsweise dem im Hintergrund dargestellten Heizelement 1 zugeführt werden. Auf der rechten Seite in der Darstellung ist das Bearbeitungswerkzeug 103 zu sehen, welches hier von einer Baugruppe gebildet wird. Das Bearbeitungswerkzeug 103 ist durch den Halter 1031 mit der Grundplatte 101 verbunden und an diesen befestigt. Beweglich zu dem Halter 1031 ist der Werkzeugarm 1032 angeordnet. Der Werkzeugarm 1032 kann in vertikaler Richtung und horizontal in einer Richtung parallel zum Halter 1031 über Aktoren bewegt werden. Über diese Beweglichkeit kann der Werkzeugarm 1032 zu einem im Halteelement 102 eingespannten Kunststoffprofil 2 zugestellt werden. Zur Realisierung dieser Beweglichkeit sind entsprechende Antriebe und Führungen vorgesehen. Selbstverständlich kann der Werkzeugarm 1032 auch in weiteren Raumachsen beweglich ausgeführt sein. An dem nach links hinten gewandten Ende des Werkzeugarms 1032 ist ein Stirnplanfräser 1033 angeordnet, der dazu vorgesehen ist, Material an der Stirnseite eines Kunststoffprofils zu entfernen. Der Stirnplanfräser 1033 ist somit das aktive Element des Bearbeitungswerkzeugs 103 für die Entfernung von Material.

Auf der in der Zeichnungsansicht nach hinten gewandten Seite des Werkzeugarmes 1032 ist parallel zu den dargestellten Stirnplanfräser 1033 ein weiterer Stirnplanfräser 1033 angeordnet. Somit ist es möglich, mit dem Werkzeugarm 1032 zwei miteinander zu verschweißende Kunststoffprofile 2 gleichzeitig zu bearbeiten, wobei jeweils ein Stirnplanfräser 1033 in Kontakt mit einer Stirnfläche jedes Kunststoffprofils kommt. Zur Einspannung und Führung weist die Vorrichtung 100 selbstverständlich auch ein zweites Halteelement 102 auf, welches in der Darstellung jedoch durch andere Vorrichtungsteile verdeckt ist. In der Darstellung ist das Bearbeitungswerkzeug 103, insbesondere der Werkzeugarm 1032 in einer Parkposition dargestellt. Zur Entfernung von Material wird der Werkzeugarm 1032 in eine Arbeitsposition bewegt, sodass die Stirnplanfräser 1033 in Kontakt mit den Stirnseiten der in den Halteelementen 102 eingespannten Kunststoffprofile kommen.

In der Darstellung hinten links ist das Heizelement 1 zu sehen. Auch das Heizelement 1 ist beweglich zur Grundplatte 101 angeordnet. In der Darstellung in Fig. 3 befindet sich das Heizelement 1 in der Schweißposition. In dieser Schweißposition können im Halteelement 102 eingespannte Kunststoffprofile 2 in einer einfachen linearen Bewegung dem Heizelement 1 zugestellt werden. Die Schweißposition des Heizelementes 1 ist dabei so eingestellt, dass die Stirnseiten der Kunststoffprofile 2 richtig zu den Ausnehmungen 14 in der Kontaktfläche 12 des Heizelementes 1 positioniert sind. Zu dieser richtigen Positionierung von Heizelement 1 zu den Stirnseiten der Kunststoffprofile sei auf Fig. 1 und 2 sowie die dazugehörige Beschreibung verwiesen. Das Heizelement 1 kann von der dargestellten Schweißposition in eine von den Kunststoffprofilen entfernte Ruheposition bewegt werden. Bei der Bewegung des Heizelementes 1 in die Ruheposition wird dieses parallel zur nach vorne links weisenden großen Fläche des Halters 1031 bewegt, wobei sich das Heizelement 1 nach rechts oben bewegt. In der Ruheposition befindet sich das Heizelement 1 beanstandet von anderen Bauteilen der Vorrichtung 100, sodass dieses einfach zur Reinigung oder zum Auswechseln von Kontaktplatten 11 zugänglich ist. Beim Betrieb der Vorrichtung 100 befindet sich jeweils entweder nur das Bearbeitungswerkzeug 103 oder das Heizelement 1 in der Arbeitsposition bzw. Schweißposition. Nach dem Einspannen der Profile der Halteelemente 102 wird zunächst das Bearbeitungswerkzeug 103 in die Arbeitsposition bewegt und entfernt anschließend teilweise Material an den Stirnseiten der Kunststoffprofile. Anschließend wird das Bearbeitungswerkzeug 103 in die dargestellte Parkposition bewegt. Anschließend wird das Heizelement 1 in die dargestellte Schweißposition bewegt und die Kunststoffprofile mithilfe der Halteelemente 102 gegen die Kontaktflächen 12 des Heizelementes 1 gedrückt und dadurch an den Auflageflächen plastifiziert. Danach wird auch das Heizelement 1 in seine Ruheposition bewegt, wodurch sich zwischen den plastifizierten Stirnseiten der Kunststoffprofile 2 keine Vorrichtungsteile mehr befinden. In diesem Zustand werden die eingespannten Kunststoffprofile 2 dann mithilfe der Halteelemente 102 zusammengedrückt und verschweißt.

Fig. 4 zeigt eine schematische Darstellung eines zu einem erfindungsgemäßen Heizelement 1 positionierten Kunststoffprofils 2. Fig. 4 ist eine stark vereinfachte Darstellung und dient der Verdeutlichung der Verhältnisse der Abmessungen eines Kunststoffprofils 2 zu der Position von zwei Ausnehmungen 14 in einer Kontaktplatte 11 eines erfindungsgemäßen Heizelementes 1. Das Heizelement 1 wird hier lediglich von einem Ausschnitt aus einer Kontaktplatte 11 präsentiert. Selbstverständlich weist das Heizelement 1, wie beispielsweise zu Fig. 1 und Fig. 2 beschrieben, noch weitere Elemente auf. In der Kontaktplatte 11 sind hier zwei Ausnehmungen 14 angeordnet, die die Kontaktfläche 12 durchbrechen. Die Ausnehmungen 14 sind taschenförmig und werden auf ihrer der Kontaktfläche 12 abgewandten Seite jeweils durch eine Bodenfläche 141 begrenzt. Kontaktfläche 12 und Bodenflächen 141 sind hier jeweils plan ausgeführt. Die Ausnehmungen 14 weisen ausgehend von der Kontaktfläche 12 bis zur Bodenfläche 141 eine Tiefe v auf. In der dargestellten Ausführungsform ist die Tiefe v bei den Ausnehmungen 14 gleich groß. Die beiden Ausnehmungen 14 sind in der Kontaktplatte 11 in einem Abstand s zueinander angeordnet. Dieser Abstand s entspricht der kürzesten Distanz zwischen den Seitenwänden der beiden Ausnehmungen 14.

Auf der linken Seite von Fig. 4 ist das rechte Ende eines Kunststoffprofils 2 dargestellt. Die nach rechts gewandte Stirnseite des Kunststoffprofils 2 ist hier rechtwinklig zur Länge des Kunststoffprofils 2 ausgerichtet. Diese Ausführungsform ermöglicht die einfachste Darstellung. In den meisten Fällen, insbesondere bei der Herstellung von Rahmen ist die Stirnseite des Kunststoffprofils 2 jedoch in einem anderen Winkel zur Länge des Profils angeordnet. In den meisten Fällen wird das Kunststoffprofil 2 auf Gehrung geformt, so dass die Stirnseite meist in einem 45° Winkel zur Länge des Profils angeordnet ist. Im in Fig. 4 dargestellten Zustand wurde an der Stirnseite bzw. an der Stirnfläche des Kunststoffprofils 2 bereits Material entfernt. In der Darstellung nach oben und nach unten gerichtet weist das Kunststoffprofil 2 an seiner Längsseite Oberflächen auf, die nach dem Verschweißen am Rahmen sichtbar sind und somit Sichtflächen bilden. Angrenzend an die nach oben und unten gewandten Sichtflächen der Längsseiten des Kunststoffprofils 2 grenzt jeweils eine Abtragung 25, 26 an. Diese Abtragungen 25, 26 sind durch ein vorheriges Entfernen von Material durch ein Bearbeitungswerkzeug entstanden. Im Bereich der Abtragungen 25, 26, fehlt somit Material. Im dargestellten Fall weisen die beiden Abtragungen 25, 26 zwei rechtwinklig zueinander orientierte Begrenzungsflächen zum Kunststoffprofil 2 auf. Die beiden inneren Begrenzungsflächen 251, 261 sind solche Begrenzungsflächen der Abtragungen 25, 26, welche parallel zur Längsrichtung des Kunststoffprofils 2 verlaufen. Die beiden inneren Begrenzungsflächen 251, 261 bilden zueinander die Breite h der nach der Entfernung von Material verbleibenden Stirnfläche des Kunststoffprofils 2. Die verbleibende Stirnfläche ist dabei die Stirnfläche, die am Kunststoffprofil 2 nach ganz rechts gewandt ist und durch die beiden Abtragungen 25, 26 begrenzt wird. Diese verbleibende Stirnfläche mit der Breite h ist relevant für das Zusammenspiel mit den im Abstand s angeordneten Ausnehmungen in der gegenüber dargestellten Kontaktplatte 11 des Halteelementes. Die beiden Abtragungen 25, 26 weisen in Längsrichtung des Kunststoffprofils 2 jeweils eine Tiefe t auf, die im dargestellten Fall für beide Abtragungen 25, 26 gleich groß ist. Im dargestellten Fall ist der Abstand s zwischen den beiden Ausnehmungen 14 genau gleich groß, wie die Breite h der verbleibenden Stirnfläche des Kunststoffprofils 2. Zur Erwärmung oder zum Aufschmelzen der verbleibenden Stirnfläche des Kunststoffprofils 2 wird dieses ausgehend vom dargestellten Zustand in Richtung der Längsrichtung des Kunststoffprofils 2 zur Kontaktplatte bewegt. Die verbleibende Stirnfläche des Kunststoffprofils 2 liegt dann deckungsgleich auf der Kontaktfläche 12 zwischen den beiden Ausnehmungen 14 auf, die deren Abmessung dem Abstand s entspricht. Die Tiefe v der beiden Ausnehmungen 14 ist größer als die Tiefe t der beiden Abtragungen 25, 26. Der Abstand der beiden der Darstellung nach oben und unten gewandten Seitenflächen der beiden gegenüberliegenden Ausnehmungen 14 ist größer als die Gesamtbreite des Kunststoffprofils 2, welche sich aus der Summe der Breite h und der Breite der Begrenzungsflächen 251, 261 ergibt. Durch diese Dimensionierung ist sichergestellt, dass eine Berührung zwischen Kunststoffprofil 2 und Kontaktplatte 11 nur in dem für eine solche Berührung vorgesehenen Bereich zwischen Breite h und Abstand s erfolgt und die außerhalb der Breite h angeordneten Bereiche der Stirnseite des Kunststoffprofils niemals in Kontakt mit der Kontaktplatte 11 kommen. Darüber hinaus sind die außerhalb an Breite h und Abstand s angrenzenden Bereiche so weit voneinander entfernt, dass auch nur sehr wenig Strahlungswärme von der Kontaktplatte 11 auf das Kunststoffprofil 2 übergeht. Dadurch ist sichergestellt, dass das angrenzend an die Sichtflächen des Kunststoffprofils 2 angeordnete Material auch nicht durch Strahlungswärme, die vom Heizelement 1 ausgeht erweicht wird.

Das Kunststoffprofil 2 weist nach oben und unten gewandt Oberflächen auf, die später Sichtflächen bilden. In der dargestellten Ausführungsform sind diese Sichtflächen mittig zur Breite der beiden Ausnehmungen 14 ausgerichtet. Unter Breite der Ausnehmungen 14 ist hierbei die Abmessung zu verstehen, die in der Zeichnungsebene von oben nach unten verläuft und eine Unterbrechung in der Kontaktfläche 12 bildet. Eine mittige Positionierung der Sichtflächen zur Breite der Ausnehmungen 14 ist besonders günstig, da das nach rechts gewandte Ende der Sichtflächen dadurch minimal durch Strahlungswärme von der Kontaktplatte 11 erwärmt wird. Für eine solche mittige Positionierung wird die Position und die Breite der Ausnehmungen 14 an das zu verarbeitende Kunststoffprofil 2 angepasst. Selbstverständlich kann die Positionierung der Sichtflächen des Kunststoffprofils 2 auch außermittig zur Breite der Ausnehmungen 14 erfolgen.

In Fig. 4 ist die Kontaktplatte 11 im Verhältnis zu ihrer Höhe, in Richtung des Maßpfeiles zur Breite s, die Dicke relativ dick, insbesondere mehr als drei mal so dick wie die Tiefe v der Ausnehmungen 14. Die Kontaktplatte 11 kann jedoch im Verhältnis zu ihrer Höhe auch wesentlich dünner ausgeführt sein. So ist beispielsweise eine Dicke der Kontaktplatte 11, die der Tiefe v entspricht ebenfalls geeignet für die Kontaktplatte 11. Bei einer solchen Dimensionierung sind die Ausnehmungen 14 dann durchgehend und durchdringen die gesamte Kontaktplatte 11. Darüber hinaus sind auch dünnere Kontaktplatten 11 mit taschenförmigen Ausnehmungen 14, beispielsweise mit einer Dicke, die 1,5 mal so groß wie die Tiefe v geeignet für ein Heizelement 1.

In den im folgenden beschriebenen Fig. 5a und 5b sind Ergebnisse des Aufschmelzens dargestellt, welche auf alternativen Konstellationen von Breite h und Abstand s beruhen.

Fig. 5 zeigt in den Ansichten 5a und 5b die unterschiedlichen Ergebnisse des Aufschmelzens bei unterschiedlichen Abständen s von Ausnehmungen 14 im Heizelement 1. In Fig. 5a und Fig. 5b ist jeweils lediglich nur das in Fig. 4 entsprechende Kunststoffprofile 2 stark vereinfacht dargestellt. Die Darstellungen zeigen das Aussehen der Kunststoffprofile 2 nach dem In-Kontakt-Bringen mit der Kontaktplatte 11 eines Heizelementes 1. Dargestellt ist somit der Zustand, in dem bereits die Stirnfläche der Kunststoffprofile 2 aufgeschmolzen wurde. Für die Definition der Abmessungen von Kontaktplatte 11 und Kunststoffprofil 2 sei auf Fig. 4 und die dazugehörige Beschreibung verwiesen.

In Fig. 5a ist das Ergebnis des Aufschmelzens für den Fall gezeigt, in dem der Abstand s zwischen zwei Ausnehmungen 14 größer ist als die Breite h der verbleibenden Stirnfläche des Kunststoffprofils 2. Beim zuvor durchgeführten Anschmelzen stand der Abstand s auf beiden Seiten über die Breite h hinaus. Beim Andrücken des Kunststoffprofils 2 an die Kontaktplatte 1 wurde das Material in diesem Bereich plastifiziert und nach außen teilweise in die Abtragungen 25, 26 verdrängt. Das verdrängte Material wird somit durch die Abtragungen 25, 26 aufgenommen. Bei entsprechend ausreichend großer Dimensionierung der Abtragungen 25, 26 kann das verdrängte Material dort verbleiben. Bei einem anschließenden Zusammendrücken zweier Kunststoffprofile 2 in dem in Fig. 5a dargestellten Zustand quillt dann kein Material über die Sichtflächen hinaus, das in den Abtragungen befindliche Material verbindet die Kunststoffprofile 2 innerhalb der Sichtfläche. In diesem Fall entsteht auf den Sichtflächen oder an der Stoßstelle auch kein Schweißwulst. Wird beim Aufschmelzen eine längere Zustellbewegung zwischen Kunststoffprofile und Kontaktplatte 11 vorgenommen, bei der mehr Material in die Abtragungen 25, 26 verdrängt wird, so kann es vorkommen, dass beim anschließenden Zusammendrücken zu viel Material in den Abtragungen 25, 26 vorliegt und nach außen über die Sichtfläche hinaus verdrängt wird. In diesem Fall kann entweder die Dimensionierung der Abtragungen 25, 26 vergrößert werden oder das verdrängte Material wird nach dem Aufschmelzen in einem weiteren Entfernungsschritt durch ein Bearbeitungswerkzeug entfernt.

In Fig. 5b ist das Ergebnis des Aufschmelzens für den Fall gezeigt, in dem der Abstand s zwischen zwei Ausnehmungen 14 kleiner ist als die Breite h der verbleibenden Stirnfläche des Kunststoffprofils 2. Im Unterschied zu Fig. 5a wurde das in Fig. 5b zuvor aufgeschmolzene Kunststoffprofil 2 in Kontakt mit einer Kontaktplatte gebracht, bei der der Abstand s zwischen den beiden Ausnehmungen 14 kleiner als die Breite h der verbleibenden Stirnfläche des Kunststoffprofils 2 ist. Dadurch lag die Kontaktfläche 12 zwischen den beiden Ausnehmungen 14 nicht mehr über die gesamte Breite h am Kunststoffprofil 2 an. Somit wurde auch nicht über die gesamte Breite h erwärmt und das dort befindliche Material nicht überall plastifizert. Nach dem Aufschmelzen verbleiben somit in den Bereichen, in denen die Kontaktfläche 12 nicht mit der Stirnfläche in Berührung war, die vorstehenden Randbereiche 27, 28. Diese Randbereiche 27, 28 sind zwar nicht plastifiziert aber dennoch durch die Erwärmung benachbarter Bereiche erweicht. Bei einem Zusammendrücken zweier Kunststoffprofile 2 in dem in Fig. 5b gezeigten Zustand werden die Randbereiche 27, 28 weggedrückt und von plastifiziertem Material umgeben. Somit entsteht auch in dieser Ausführungsform eine ausreichend feste Verbindungsstelle beim Verschweißen. Alternativ können die Randbereiche 27, 28 jedoch auch in einem im Anschluss an das Aufschmelzen erfolgenden weiteren Entfernungsschritt durch ein Bearbeitungswerkzeug entfernt werden.

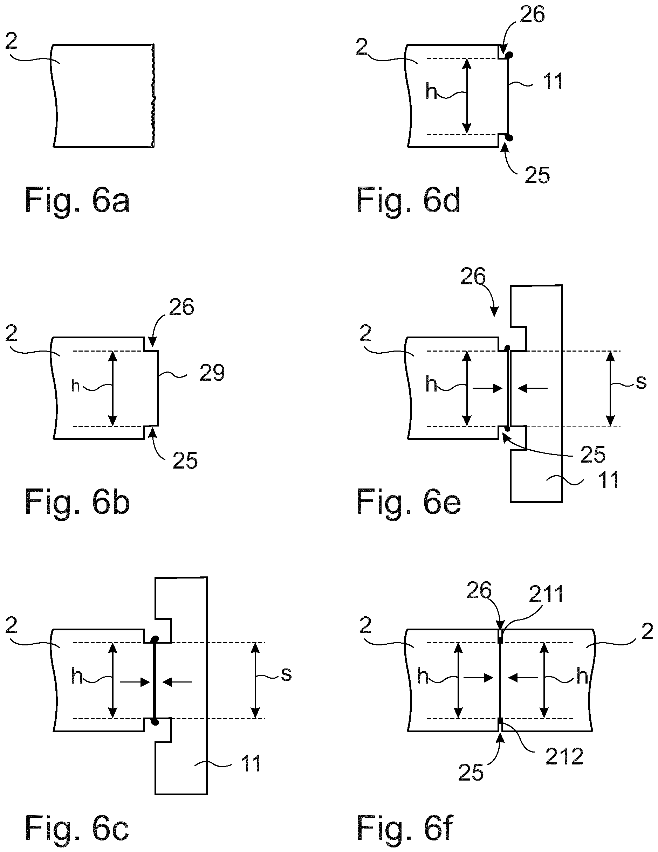

Fig. 6 zeigt in den Ansichten 6a bis 6f schematische Darstellungen von Verfahrensschritten beim Verschweißen von Kunststoffprofilen 2. Diese Ansichten sind stark vereinfacht dargestellt. Wie auch in Fig. 4 und 5 ist die Stirnfläche des dargestellten Kunststoffprofils 2 auch in Fig. 6 rechtwinklig zur Längsrichtung des Kunststoffprofils 2 ausgerichtet. Selbstverständlich kann die Stirnfläche auch in einem anderen Winkel, beispielsweise in einem 45° Winkel zur Längsrichtung des Kunststoffprofils 2 ausgerichtet sein.

Fig. 6a zeigt den Zustand eines Kunststoffprofils 2, in dem dieses dem Verfahren zur Verschweißung zugeführt wird. Die nach rechts gewandte Stirnseite des Kunststoffprofils 2 ist abgesägt und befindet sich in einem sägerauen Zustand. Die sägeraue Oberfläche ist uneben. Beim Absägen wurde ein Übermaß auf dem Kunststoffprofile 2 belassen, so dass das Endmaß für die Verschweißung in den folgenden Schritten eingestellt werden muss.

Fig. 6b zeigt das Kunststoffprofil 2 nach dem teilweisen Entfernen von Material an der Stirnseite/Stirnfläche durch ein Bearbeitungswerkzeug. In der Darstellung oben und unten, angrenzend an die Sichtflächen des Kunststoffprofils 2 wurden am Umfang die Abtragungen 25, 26 durch das Bearbeitungswerkzeug entfernt. Diese Abtragungen 25, 26 sind dazu vorgesehen Material, welches beim Verschweißen nach außen quillt, aufzunehmen. Weiterhin wurde durch das Bearbeitungswerkzeug an der nach rechts gewandten verbleibenden Stirnfläche Material entfernt, was durch das Volumen 29 dargestellt ist. Durch die Entfernung des Volumens 29 wurde die zuvor sägeraue Oberfläche geebnet und der Winkel der Stirnfläche zur Längsseite des Profils eingestellt. Zur Entfernung des Volumens 29 ist eine Ausführung des Bearbeitungswerkzeuges als Stellenplanfräser besonders vorteilhaft, da ein solches Werkzeug schnell und präzise große Flächen in sehr guter Oberflächenqualität bearbeiten kann.

Fig. 6c zeigt das Kunststoffprofil 2 beim Aufschmelzen in Kontakt mit der Kontaktplatte 11 des Heizelementes 1. Der in dieser Ansicht dargestellte Zustand entspricht einem Zustand, der ausgehend von Fig. 4 nach dem in Berührung-Bringen von Kunststoffprofil 2 und Kontaktplatte 11 entsteht. In dem dargestellten Zustand wird das Kunststoffprofil 2 gegen die heiße Kontaktplatte 11 gedrückt. Dabei wird Material an der verbleibenden Stirnseite des Kunststoffprofils 2 aufgeschmolzen und plastifiziert. Dabei quillt dieses plastifizierte Material nach außen. Wird das Kunststoffprofil 2 über eine längere Zeit gegen die Kontaktplatte 11 gedrückt so wird immer mehr Material verdrängt. Durch das Aufschmelzen bewegt sich das Kunststoffprofil 2 unter Anpressdruck auch auf die Kontaktplatte 11 zu. Dabei wird kontinuierlich Material an der Stirnfläche abgebrannt, die Länge des Kunststoffprofils 2 verringert sich dabei. Über diesen Abbrand, der durch Anpressdruck und Anpresszeit einstellbar ist, kann Einfluss auf das Endmaß des Kunststoffprofils 2 genommen werden.

Fig. 6d zeigt den Zustand des Kunststoffprofils 2 nach einem optionalen, zweiten Entfernungsschritt von Material. In diesem zweiten Entfernungsschritt wurde das beim Aufschmelzen in Fig. 6c in die Abtragungen 25, 26 verdrängte Material wieder entfernt. Auch für diesen optionalen Entfernungsschritt wurde das Bearbeitungswerkzeug verwendet. Im Gegensatz zu der Entfernung in Fig. 6b wurde an der verbleibenden Stirnfläche kein Material entfernt.

Fig. 6e zeigt das Kunststoffprofil 2 bei einem zweiten Anschmelzen. Dabei wird das Kunststoffprofil 2 nach dem zweiten Entfernungsschritt gemäß Fig. 6d analog zur Fig. 6c erneut angeschmolzen. Die in Fig. 6d und 6e dargestellten Schritte sind optional. Diese Schritte können jedoch auch mehrfach wiederholt werden, um individuell die Qualität und Festigkeit der Schweißverbindung einzustellen.

Fig. 6f zeigt den Zustand des Kunststoffprofils 2 nach dem Zusammendrücken und Verschweißen mit einem anderen, rechts dargestellten Kunststoffprofil 2. Das Material in der Mitte der beiden Kunststoffprofile 2 ist miteinander verschmolzen, es ist eine feste und durchgehende Schweißverbindung entstanden. Aufgrund der zuvor angebrachten Abtragungen 25, 26 und der Verwendung einer erfindungsgemäßen Kontaktplatte 11 mit Ausnehmungen 14 ist jedoch das Material in den Grenzbereichen 211, 212 zu den Sichtflächen nicht miteinander verschmolzen. In diesem Bereich ist das Material vor dem Zusammendrücken fest und nicht plastifiziert verblieben. Aus diesem Grund ist die Oberflächenqualität in diesem Grenzbereichen 211, 212 besonders gut, da insbesondere kein Aufwölben und kein Eindrücken beim Zusammenführen der beiden Kunststoffprofile 2 aufgetreten ist.

Beim Zusammendrücken werden die Kunststoffprofile 2 parallel zur deren Längsrichtung aufeinander zu bewegt. Besonders günstige Ergebnisse beim Verschweißen werden dadurch erreicht, dass die äußeren Sichtflächen in den Grenzbereichen 211, 212 gerade aneinander anstoßen, ohne dass in den Grenzbereichen 211, 212 beim Zusammendrücken Druck zwischen den Sichtflächen entsteht. Dadurch ist sichergestellt, dass hier keine ungewünschten Verformungen auftreten. Das Verfahren toleriert jedoch auch leichte Anpressdrücke zwischen den Sichtflächen in den Grenzbereichen 211, 212 da hier das Material in einem nicht plastifizierten, festen Zustand vorliegt, der geeignet ist leichte Anpressdrücke aufzunehmen und zu kompensieren.

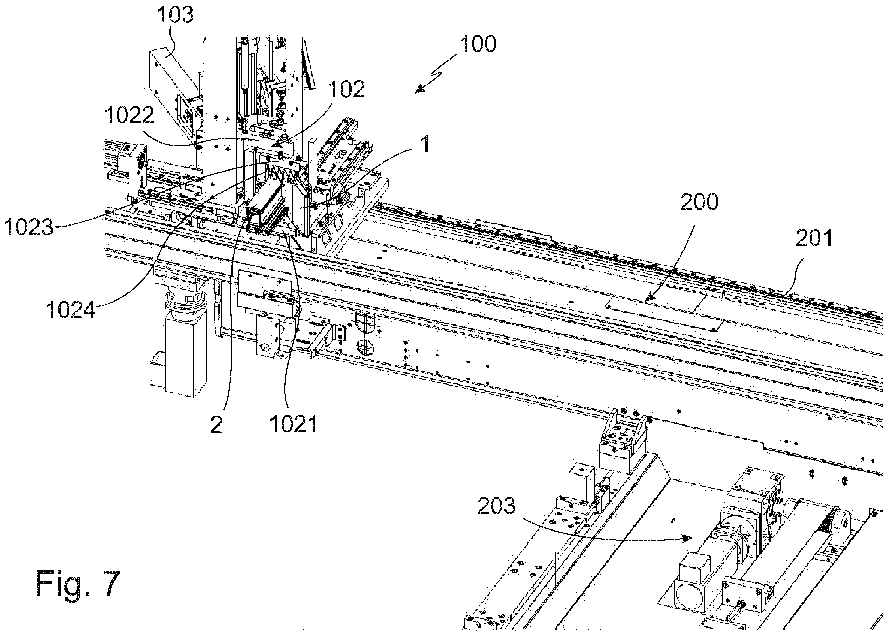

Fig. 7 zeigt eine perspektivische Ansicht einer erfindungsgemäßen Vorrichtung 100 mit anderen Komponenten einer Schweißmaschine. In Fig. 7 ist die Vorrichtung 100 aus Fig. 3 an einer Schweißmaschine angeordnet, welche weitere Komponenten umfasst. Die Schweißmaschine basiert auf einem Maschinengestell 200. Dieses Maschinengestell 200 ist dazu vorgesehen, eine oder mehrere Vorrichtungen 100 zu tragen. Exemplarisch ist eine Vorrichtung 100 links oben dargestellt. Für jede Verbindungsstelle zwischen zwei Kunststoffprofilen 2 wird eine Vorrichtung 100 benötigt. Zur Herstellung eines Rahmens werden üblicherweise vier Vorrichtungen 100 eingesetzt, von denen jede Vorrichtung 100 eine Ecke des Rahmens erzeugt. Ein anderer Begriff für Vorrichtung 100 ist Schweißkopf, eine Schweißmaschine mit vier Vorrichtungen 100 wird oft auch als Vierkopfschweißmaschine bezeichnet. Das Maschinengestell 200 umfasst eine erste Führung 201, welche in der Darstellung von links nach rechts verläuft. Die Vorrichtung 100 kann entlang dieser ersten Führung 201 linear bewegt werden. Dazu sind an der Vorrichtung 100 oder an der ersten Führung 201 Elemente zur Bewegung der Vorrichtung 100 vorgesehen, wie beispielsweise Motoren und Getriebe. Gegenüber der dargestellten Vorrichtung 100 wird an der ersten Führung 201 eine weitere Vorrichtung 100 angeordnet, die hier der Übersichtlichkeit halber nicht dargestellt ist. Die zweite Vorrichtung 100 ist ebenfalls entlang der ersten Führung 201 beweglich, sodass die beiden Vorrichtungen 100 entlang der ersten Führung 201 aufeinander zu und voneinander weg bewegt werden können. Durch diese Beweglichkeit können die in den Vorrichtungen 100 eingespannten Kunststoffprofile 2 zum Heizelement 1, zum Bearbeitungswerkzeug 103 und beim Zusammendrücken nach dem Aufschmelzen zugestellt werden. In der Zeichnungsansicht vor der dargestellten ersten Führung 201 ist meist eine weitere, zweite Führung angeordnet, welche ähnlich oder gleich zur ersten Führung 201 ausgeführt ist. Auch auf der zweiten Führung werden zwei Vorrichtungen 100 linear beweglich zueinander angeordnet. Zwischen der ersten Führung 201 und der zweiten Führung ist eine Antriebsbaugruppe 203 angeordnet. Diese Antriebsbaugruppe 203 ist dazu vorgesehen, die beiden Führungen mit den darauf montierten Vorrichtungen 100 aufeinander zuzubewegen. Die Antriebsbaugruppe 203 ist mit der ersten Führung 201 und der nicht dargestellten zweiten Führung verbunden. Durch die von der Antriebsbaugruppe 203 ermöglichte Bewegung der beiden Führungen aufeinander zu ist die Herstellung von rechteckigen Rahmen möglich. Die Antriebsbaugruppe 203 ermöglicht rechtwinklig zu den ersten Führung 201 eine Zustellung der Kunststoffprofile 2 zum Heizelement 1, zum Bearbeitungswerkzeug 103 und beim Zusammendrücken nach dem Aufschmelzen. Die Antriebsbaugruppe 203 umfasst dabei die erforderlichen Führungen, Getriebeelemente und Motoren um zwei Führungen 201 aufeinander zu und voneinander weg zu bewegen. Bei der Herstellung eines rechteckigen Rahmens aus Kunststoffprofilen 2 werden die beiden auf einer Führung 201 angeordneten Vorrichtungen jeweils aufeinander zu bewegt, gleichzeitig werden mithilfe der Antriebsbaugruppe 203 die beiden parallel zueinander angeordneten Führungen 201 ebenfalls aufeinander zu bewegt.

In Fig. 7 ist an der Vorrichtung 100 ein Halteelement 102 in geöffnetem Zustand dargestellt. Das Halteelement 102 umfasst eine hier dreieckig ausgeführte untere Klemmplatte 1021 und eine ebenfalls dreieckig ausgeführte obere Klemmplatte 1022. Zwischen die beiden Klemmplatten 1021 und 1022 wird das Kunststoffprofil 2 eingeklemmt. Im dargestellten Zustand ist der Übersichtlichkeit halber die obere Klemmplatte 1022 nach oben bewegt, sodass das Kunststoffprofil 2 im dargestellten Zustand nicht eingeklemmt oder gehalten ist. Zur Klemmung wird die obere Klemmplatte 1022 vertikal nach unten bewegt, so lange bis sie auf dem Kunststoffprofil 2 aufliegt. Das Kunststoffprofil 2 liegt in der Darstellung an einem Heizelement 1 an, welches sich aktuell in der Schweißposition befindet. Auf der dem dargestellten Kunststoffprofil 2 gegenüberliegenden Seite des Heizelementes 1 ist eine weiteres Halteelement 102 mit einem darin eingespannten weiteren Kunststoffprofile 2 angeordnet. Das zweite Kunststoffprofile 2 mit dem weiteren Halteelement 102 sind ebenfalls der Übersichtlichkeit halber nicht dargestellt. An der oberen Klemmplatte 1022 ist hier eine Reinigungsleiste 1023 angeordnet. Diese Reinigungsleiste 1023 dient dazu, Verschmutzungen vom Kunststoffprofil, welche beispielsweise bei der Bearbeitung durch das Bearbeitungswerkzeug 103 entstehen können, zu entfernen. Die Reinigungsleiste 1023 weist in ihrem Inneren Kanäle auf, die in Düsen münden. An die Reinigungsleiste 1023 wird Pressluft angeschlossen, sodass, wenn gewünscht, aus den Düsen Pressluft austritt und das Kunststoffprofil 2 durch Abblasen reinigt. Diese austretende Pressluft ist durch Linien 1024 symbolisiert. Selbstverständlich kann eine Vorrichtung 100 bzw. ein Halteelement 102 auch ohne Reinigungsleiste 1023 ausgeführt sein. In Fig. 7 befindet sich das Bearbeitungswerkzeug 103 in seiner Parkposition und ist größtenteils von anderen Elementen der Vorrichtung 100 verdeckt.

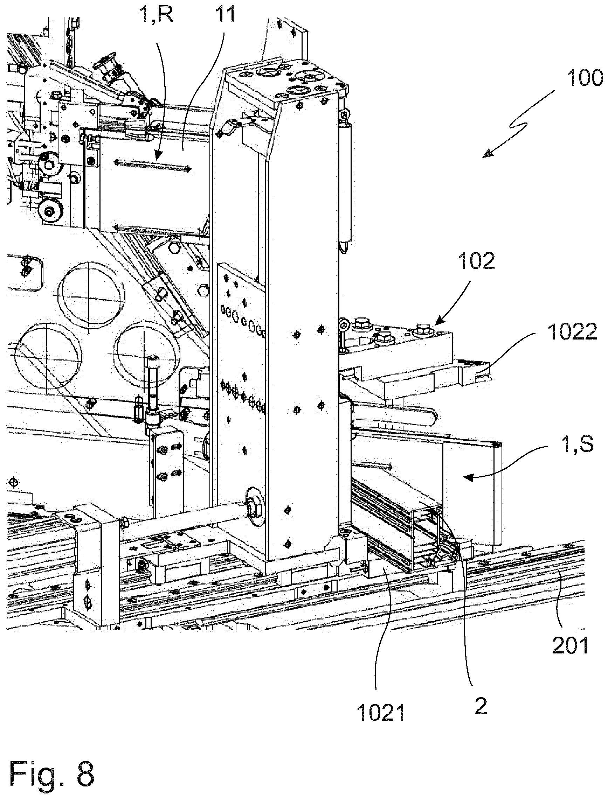

Fig. 8 zeigt eine perspektivische Ansicht einer erfindungsgemäßen Vorrichtung 100 mit einem Heizelement 1 in Schweißposition und in Ruheposition. Fig. 8 zeigt eine Vorrichtung 100 aus einer anderen Perspektive als in Fig. 3 und Fig. 7. In der Darstellung in Fig. 8 ist das Heizelement 1 rechts unten in der Schweißposition S und links oben in der Ruheposition R dargestellt. In Realität ist das Heizelement 1 nur einmal vorhanden und befindet sich entweder in der Schweißposition S oder in der Ruheposition R. In der rechts unten dargestellten Schweißposition S ist das Heizelement 1 so positioniert, dass das Kunststoffprofil 2, wie beispielsweise zu Fig. 4 im Detail beschrieben, zum Aufschmelzen an das Heizelement 1 heran bewegt werden kann. Für diese Heran- oder Zustellebewegung werden die zu Fig. 7 beschriebenen Elemente, beispielsweise Führung 201 und Antriebsbaugruppe 203, eingesetzt. In der links oben dargestellten Ruheposition R ist das Heizelement 1 beabstandet von anderen Elementen oder Baugruppen der Vorrichtung 100. Das Heizelement 1 ist in der Ruheposition R somit vom Maschinenbediener einfach zu erreichen, sodass in der Ruheposition R Reinigung- oder Wartungsarbeiten am Heizelement 1 ergonomisch ausgeführt werden können. In der Ruheposition R ist auch ein Wechsel der Kontaktplatten 11 am Heizelement 1 in einfacher Weise möglich. Auch in Fig. 8 ist der Übersichtlichkeit halber nur ein Halteelement 102 dargestellt. Wie in Fig. 7 ist die obere Klemmplatte 1022 vom Kunststoffprofil 2 wegbewegt. Zum Fixieren bzw. zum Einspannen des Kunststoffprofils 2 wird die obere Klemmplatte 1022 vertikal nach unten auf die untere Klemmplatte 1021 zubewegt. Das Halteelement 102 weist für diese Zustellbewegung der beiden Klemmplatten 1021, 1022 einen entsprechenden Antrieb auf. Die Vorrichtung in Fig. 8 weist auch ein in Fig. 3 dargestelltes Bearbeitungswerkzeug 103 auf, welches in Fig. 8 jedoch durch andere Elemente der Vorrichtung verdeckt und somit nicht sichtbar ist.

## Patentansprüche

1. Heizelement (1) zur Erwärmung von Kunststoffprofilen vor deren Verbindung durch Schweißen umfassend:
a) zumindest eine Kontaktplatte (11) mit einer zumindest einem Kunststoffprofil zugewandten Kontaktfläche (12),
b) zumindest ein Erwärmungselement (13), welches in Wirkverbindung mit der Kontaktplatte (11) steht,
c) wobei die Kontaktplatte (11) zumindest eine Ausnehmung (14) aufweist, welche in der Kontaktfläche (12) angeordnet ist und welche die Kontaktfläche (12) unterbricht,
d) wobei die Ausnehmung (14) die Kontaktplatte (11) komplett durchdringt oder die Ausnehmung (14) eine Bodenfläche (141) aufweist, wobei die Bodenfläche (141) die Ausnehmung (14) auf der der Kontaktfläche (12) abgewandten Seite der Ausnehmung (14) begrenzt und die Bodenfläche (141) gegenüber der Kontaktfläche (12) zurückversetzt angeordnet ist,
e) wobei die Kontaktplatte (11) und das Erwärmungselement (13) als unterschiedliche Bauteile ausgeführt sind, und
f) wobei die Kontaktplatte (11) zumindest teilweise flächig auf dem Erwärmungselement (13) aufliegt, um eine gute Wärmeübertragung zwischen beiden Bauteilen sicherzustellen,
**dadurch gekennzeichnet,**
g) **dass** das Heizelement (1) zumindest ein Verbindungselement (15) aufweist, welches die Kontaktplatte (11) mit dem Erwärmungselement (13) lösbar fest verbindet, und
h) **dass** zwei Kontaktplatten (11) vorgesehen sind, welche im Betriebszustand auf jeweils einer Seite des Erwärmungselementes (13) angeordnet sind und welche bezogen auf die Mittelebene des Erwärmungselementes (13) zueinander symmetrisch ausgeführt sind.

2. Heizelement (1) nach einem der vorhergehenden Ansprüche, **dadurch gekennzeichnet, dass** die Form der Ausnehmung (14) in einer Draufsicht auf die Kontaktfläche (12) zumindest teilweise der Form Außenkontur der Stirnseite eines zu verschweißenden Kunststoffprofiles entspricht.

3. Heizelement (1) nach Anspruch 1, **dadurch gekennzeichnet, dass** das Verbindungselement (15) zumindest einen Betätigungshebel (151) und zumindest ein Druckstück (152) umfasst, wobei das Druckstück (152) durch den Betätigungshebel (151) zum Erwärmungselement (13) hin und von diesem wegbewegbar ausgeführt ist und das Druckstück (152) zumindest teilweise in seiner Form komplementär zu einem Rand der Kontaktplatten (11) ausgeführt ist.

4. Vorrichtung (100) zum Verschweißen von Kunststoffprofilen, umfassend
a) eine Grundplatte (101),
b) zumindest zwei Halteelemente (102), die dazu vorgesehen sind, jeweils ein Kunststoffprofil (2) zu halten, wobei die Halteelemente (102) relativ zur Grundplatte (101) beweglich ausgeführt sind,
c) zumindest ein Bearbeitungswerkzeug (103), welches dazu vorgesehen ist, an zumindest einem Teil, zumindest einem Kunststoffprofil (2) Material an dessen Stirnseite oder angrenzend an dessen Stirnseite zu entfernen,
d) zumindest ein Heizelement (1) nach einem der Ansprüche 1 bis 3,
e) wobei das Heizelement (1) relativ zur Grundplatte (101) beweglich zwischen einer Schweißposition und einer Ruheposition ausgeführt ist,
f) wobei das Heizelement (1) in der Schweißposition so zu den zu verschweißenden Kunststoffprofilen (2) positioniert ist, dass die Ausnehmung (14) jeder Kontaktplatte (11) zumindest teilweise der Außenkontur (21) des zu verschweißenden Kunststoffprofils (2) gegenüberliegend angeordnet ist.

5. Vorrichtung (100) nach Anspruch 4, **dadurch gekennzeichnet, dass** das Bearbeitungswerkzeug (103) als Fräswerkzeug ausgeführt ist, wobei das Bearbeitungswerkzeug (103) zwischen einer Parkposition und eine Arbeitsposition beweglich ausgeführt ist.

6. Vorrichtung (100) nach Anspruch 4 oder 5, **dadurch gekennzeichnet, dass** das Bearbeitungswerkzeug (103) zumindest einen Stirnplanfräser umfasst und das Bearbeitungswerkzeug (103) in der Arbeitsposition entlang zumindest zweier Raumachsen bewegbar ist, so dass das Bearbeitungswerkzeug (103) dazu geeignet ist, entlang des gesamten Umfangs zumindest eines Kunststoffprofiles (2) Material zu entfernen und/oder das Heizelement (1) in seiner Ruheposition von anderen Komponenten der Vorrichtung (100) beabstandet und gut für einen Bediener zugänglich angeordnet ist, wodurch ein Auswechseln oder eine Reinigung der Kontaktplatte (11) in der Ruheposition möglich ist.

7. Verfahren zum Verschweißen von Kunststoffprofilen, insbesondere unter Verwendung einer Vorrichtung (100) nach einem der Ansprüche 4 bis 6, umfassend die Schritte,
A. Einspannen der Kunststoffprofile,
B. Entfernen zumindest eines Teils einer Stirnflächen der Kunststoffprofile durch ein Bearbeitungswerkzeug,
C. Aufschmelzen der nach dem Entfernen B verbleibenden Stirnflächen der Kunststoffprofile durch In-Kontakt-Bringen mit einem Heizelement (1) nach einem der Ansprüche 1 bis 3, wobei das Heizelement (1) zwei Kontaktplatten (11) mit jeweils zumindest einer Kontaktfläche (12) aufweist, und wobei jeweils eine Kontaktfläche (12) in Kontakt mit einer Stirnseiten eines Kunststoffprofils gebracht wird, und die Ausnehmungen (14) der Kontaktflächen (12) des Heizelementes (1) so zu den Stirnseiten positioniert werden, dass die Ausnehmungen (14) den durch das Entfernen B bearbeiteten Bereichen der Kunststoffprofile gegenüberliegen,
D. Zusammendrücken und Verschweißen der durch das Aufschmelzen C aufgeschmolzenen Stirnseiten der Kunststoffprofile.

8. Verfahren nach Anspruch 7, **dadurch gekennzeichnet, dass** in Verfahrensschritt Aufschmelzen C die verbleibende Stirnfläche der Kunststoffprofile eine Breite (h) aufweist und die Kontaktflächen (12) des Heizelementes (1) zumindest zwei Ausnehmungen (14) aufweisen, die in einem Abstand (s) zueinander angeordnet sind, wobei die Breite (h) dem Abstand (s) entspricht und beim Aufschmelzen C die Breite (h) deckungsgleich zum Abstand (s) positioniert wird.

9. Verfahren nach Anspruch 7 oder 8, **dadurch gekennzeichnet, dass** nach dem Aufschmelzen C und vor dem Zusammendrücken D folgende zusätzliche Schritte durchgeführt werden:
B2. erneutes Entfernen eines Teils einer Stirnfläche der Kunststoffprofile und/oder zumindest teilweises Entfernen von durch das Aufschmelzen C verdrängtem Material von den Kunststoffprofilen durch ein Bearbeitungswerkzeug,
C2. erneutes Aufschmelzen der nach dem Entfernen B2 verbleibenden Stirnflächen der Kunststoffprofile durch In-Kontakt-Bringen mit einem Heizelement (1) nach einem der vorhergehenden Ansprüche, wobei die Ausnehmungen (14) der Kontaktflächen (12) des Heizelementes (1) so zu der Stirnseite positioniert werden, dass die Ausnehmungen (14) den durch das Entfernen B2 bearbeiteten Bereichen der Kunststoffprofile gegenüberliegen.

10. Verfahren nach einem der Ansprüche 7 bis 9, **dadurch gekennzeichnet, dass** nach dem Aufschmelzen C und vor dem Zusammendrücken D folgender zusätzlicher Schritt durchgeführt wird:
B2. erneutes Entfernen eines Teils einer Stirnfläche der Kunststoffprofile und/oder zumindest teilweises Entfernen von durch das Aufschmelzen C verdrängtem Material von den Kunststoffprofilen durch ein Bearbeitungswerkzeug.

## Claims

1. Heating element (1) for heating plastic profiles before they are joined by welding:
a) at least one contact plate (11) with a contact surface (12) facing at least one plastic profile,
b) at least one heating element (13), which is in operative connection with the contact plate (11),
c) wherein the contact plate (11) has at least one recess (14), which is arranged in the contact surface (12) and which interrupts the contact surface (12),
d) wherein the recess (14) completely penetrates the contact plate (11) or the recess (14) has a bottom surface (141), wherein the bottom surface (141) delimits the recess (14) on the side of the recess (14) facing away from the contact surface (12) and the bottom surface (141) is set back relative to the contact surface (12),
e) wherein the contact plate (11) and the heating element (13) are designed as different components, and
f) wherein the contact plate (11) rests at least partially flat on the heating element (13) in order to ensure good heat transfer between the two components,
**characterised**
g) **in that** the heating element (1) has at least one connecting element (15) which firmly connects the contact plate (11) to the heating element (13) in a detachable manner, and
h) **in that** two contact plates (11) are provided, which in the operating state are arranged on one side of the heating element (13) in each case and which are designed symmetrically to one another in relation to the centre plane of the heating element (13).

2. Heating element (1) according to one of the preceding claims, **characterised in that** the shape of the recess (14) in a plan view of the contact surface (12) corresponds at least partially to the shape of the outer contour of the end face of a plastic profile to be welded.

3. Heating element (1) according to claim 1, **characterised in that** the connecting element (15) comprises at least one actuating lever (151) and at least one pressure piece (152), the pressure piece (152) being actuated by the actuating lever (151). (151) is designed to be movable towards and away from the heating element (13) and the pressure piece (152) is at least partially complementary in shape to an edge of the contact plates (11).

4. Device (100) for welding plastic profiles, comprising
a) a base plate (101),
b) at least two retaining elements (102), which are intended to hold a plastic profile (2) in each case, the retaining elements (102) being arranged in such a way that, relative to the base plate (101) are designed to be movable,
c) at least one machining tool (103), which is intended to remove material from at least one part, at least one plastic profile (2) at its end face or adjacent to its end face,
d) at least one heating element (1) according to one of claims 1 to 3,
e) wherein the heating element (1) is designed to be movable relative to the base plate (101) between a welding position and a rest position,
f) wherein the heating element (1) is positioned in the welding position relative to the plastic profiles (2) to be welded in such a way that the recess (14) of each contact plate (11) is arranged at least partially opposite the outer contour (21) of the plastic profile (2) to be welded.

5. Device (100) according to claim 4, **characterised in that** the machining tool (103) is designed as a milling tool, wherein the machining tool (103) is designed to be movable between a parking position and a working position.

6. Device (100) according to claim 4 or 5, **characterised in that** the machining tool (103) comprises at least one face milling cutter and the machining tool (103) is movable in the working position along at least two spatial axes, so that the machining tool (103) is suitable for this purpose, to remove material along the entire circumference of at least one plastic profile (2) and/or the heating element (1) is arranged in its rest position at a distance from other components of the device (100) and easily accessible to an operator, whereby replacement or cleaning of the contact plate (11) is possible in the rest position.

7. Method for welding plastic profiles, in particular using a device (100) according to one of claims 4 to 6, comprising the steps,
A. Clamping the plastic profiles,
B. Removal of at least part of an end face of the plastic profiles using a machining tool,
C. Melting of the end faces of the plastic profiles remaining after removal B by bringing them into contact with a heating element (1) according to one of claims 1 to 3, wherein the heating element (1) has two contact plates (11) each with at least one contact surface (12), and wherein in each case one contact surface (12) is brought into contact with an end face of a plastic profile, and the recesses (14) of the contact surfaces (12) of the heating element (1) are positioned relative to the end faces in such a way that the recesses (14) are opposite the regions of the plastic profiles processed by the removal B,
D. Pressing together and welding the ends of the plastic profiles that have been melted by melting C.

8. Method according to claim 7, **characterised in that** in method step melting C the remaining end face of the plastic profiles has a width (h) and the contact surfaces (12) of the heating element (1) have at least two recesses (14) which are arranged at a distance (s) from one another, wherein the width (h) corresponds to the distance (s) and during melting C the width (h) corresponds to the distance (s).
(h) is positioned congruently to the distance (s).

9. Process according to claim 7 or 8, **characterised in that** the following additional steps are carried out after melting C and before compression D:
B2. removing again a part of an end face of the plastic profiles and/or at least partially removing material displaced by the melting C from the plastic profiles by means of a processing tool,
C2. re-melting of the end faces of the plastic profiles remaining after removal B2 by bringing them into contact with a heating element (1) according to one of the preceding claims, wherein the recesses (14) of the contact faces (12) of the heating element (1) are positioned relative to the end face in such a way that the recesses (14) lie opposite the regions of the plastic profiles which have been processed by removal B2.

10. Process according to one of claims 7 to 9, **characterised in that** the following additional step is carried out after melting C and before compression D:
B2. removing again a part of an end face of the plastic profiles and/or at least partially removing material displaced by the melting C from the plastic profiles by means of a processing tool.

## Revendications

1. Elément chauffant (1) pour le chauffage de profilés en matière plastique avant leur assemblage par soudage, comprenant :
a) au moins une plaque de contact (11) avec une surface de contact (12) tournée vers au moins un profilé en plastique,
b) au moins un élément chauffant (13), qui est en liaison active avec la plaque de contact (11),
c) dans lequel la plaque de contact (11) présente au moins un évidement (14) qui est disposé dans la surface de contact (12) et qui interrompt la surface de contact (12),
d) l'évidement (14) traversant complètement la plaque de contact (11) ou l'évidement (14) présentant une surface de fond (141), la surface de fond (141) délimitant l'évidement (14) sur le côté de l'évidement (14) opposé à la surface de contact (12) et la surface de fond (141) étant disposée en retrait par rapport à la surface de contact (12),
e) la plaque de contact (11) et l'élément chauffant (13) étant réalisés sous forme de composants différents, et
f) la plaque de contact (11) reposant au moins partiellement à plat sur l'élément chauffant (13) afin d'assurer un bon transfert de chaleur entre les deux composants,
**caractérisé**
g) **en ce que** l'élément chauffant (1) présente au moins un élément de liaison (15) qui relie solidement et de manière amovible la plaque de contact (11) à l'élément chauffant (13), et
h) **en ce qu'**il est prévu deux plaques de contact (11) qui, à l'état de fonctionnement, sont disposées chacune sur un côté de l'élément chauffant (13) et qui sont réalisées symétriquement l'une par rapport à l'autre par rapport au plan médian de l'élément chauffant (13).

2. Elément chauffant (1) selon l'une des revendications précédentes, **caractérisé en ce que** la forme de l'évidement (14) correspond au moins partiellement, en vue de dessus de la surface de contact (12), à la forme du contour extérieur de la face frontale d'un profilé en matière plastique à souder.

3. Elément chauffant (1) selon la revendication 1, **caractérisé en ce que** l'élément de connexion (15) comprend au moins un levier d'actionnement (151) et au moins un élément de pression (152), l'élément de pression (152) étant actionné par le levier d'actionnement (151) est réalisée de manière à pouvoir se rapprocher et s'éloigner de l'élément chauffant (13), et la pièce de pression (152) est réalisée au moins partiellement de manière à avoir une forme complémentaire à un bord des plaques de contact (11).

4. Dispositif (100) pour souder des profilés en matière plastique, comprenant
a) une plaque de base (101),
b) au moins deux éléments de maintien (102), qui sont prévus pour maintenir chacun un profilé en matière plastique (2), les éléments de maintien (102) étant disposés par rapport à la plaque de base (101) sont réalisés de manière mobile,
c) au moins un outil d'usinage (103) qui est prévu pour enlever, sur au moins une partie, au moins un profilé en matière plastique (2), du matériau sur sa face frontale ou adjacent à sa face frontale,
d) au moins un élément chauffant (1) selon l'une des revendications 1 à 3,
e) dans lequel l'élément chauffant (1) est réalisé mobile par rapport à la plaque de base (101) entre une position de soudage et une position de repos,
f) l'élément chauffant (1) étant positionné, dans la position de soudage, par rapport aux profilés en plastique (2) à souder, de telle sorte que l'évidement (14) de chaque plaque de contact (11) est disposé au moins partiellement en face du contour extérieur (21) du profilé en matière plastique (2) à souder.

5. Dispositif (100) selon la revendication 4, **caractérisé en ce que** l'outil d'usinage (103) est réalisé sous forme d'outil de fraisage, l'outil d'usinage (103) étant réalisé mobile entre une position de stationnement et une position de travail.

6. Dispositif (100) selon la revendication 4 ou 5, **caractérisé en ce que** l'outil d'usinage (103) comprend au moins une fraise à planer frontale et l'outil d'usinage (103) est mobile dans la position de travail le long d'au moins deux axes spatiaux, de sorte que l'outil d'usinage (103) est adapté pour, d'enlever de la matière le long de toute la périphérie d'au moins un profilé en plastique (2) et/ou que l'élément chauffant (1), dans sa position de repos, est disposé à distance des autres composants du dispositif (100) et est facilement accessible pour un opérateur, ce qui permet de remplacer ou de nettoyer la plaque de contact (11) dans la position de repos.

7. Procédé de soudage de profilés en matière plastique, notamment en utilisant un dispositif (100) selon l'une des revendications 4 à 6, comprenant les étapes suivantes,
A. Serrage des profilés en plastique,
B. l'élimination d'au moins une partie d'une face d'extrémité des profilés en matière plastique au moyen d'un outil d'usinage,
C. fusion des faces frontales des profilés en matière plastique restant après l'enlèvement B par mise en contact avec un élément chauffant (1) selon l'une des revendications 1 à 3, l'élément chauffant (1) présentant deux plaques de contact (11) avec chacune au moins une surface de contact (12), et dans lequel une surface de contact (12) respective est amenée en contact avec une face frontale d'un profilé en matière plastique, et les évidements (14) des surfaces de contact (12) de l'élément chauffant (1) sont positionnés par rapport aux faces frontales de telle sorte que les évidements (14) sont situés en face des zones des profilés en matière plastique traitées par l'enlèvement B,
D. Compression et soudage des faces frontales des profilés en plastique fondues par la fusion C.

8. Procédé selon la revendication 7, **caractérisé en ce que** dans l'étape de procédé de fusion C, la surface frontale restante des profilés en matière plastique présente une largeur (h) et les surfaces de contact (12) de l'élément chauffant (1) présentent au moins deux évidements (14) qui sont disposés à une distance (s) l'un de l'autre, la largeur (h) correspondant à la distance (s) et, lors de la fusion C, la largeur (h) correspondant à la distance (s) est positionné de manière à coïncider avec la distance (s).

9. Procédé selon la revendication 7 ou 8, **caractérisé en ce qu'**après la fusion C et avant la compression D, on effectue les étapes supplémentaires suivantes :
B2. enlever à nouveau une partie d'une face frontale des profilés en matière plastique et/ou enlever au moins partiellement de la matière déplacée par la fusion C des profilés en matière plastique au moyen d'un outil d'usinage,
C2. refusion des faces frontales des profilés en matière plastique restant après l'enlèvement B2 par mise en contact avec un élément chauffant (1) selon l'une des revendications précédentes, les évidements (14) des surfaces de contact (12) de l'élément chauffant (1) étant positionnés par rapport à la face frontale de manière à ce que les évidements (14) soient en face des zones des profilés en matière plastique traitées par l'enlèvement B2.

10. Procédé selon l'une quelconque des revendications 7 à 9, **caractérisé en ce qu'**après la fusion C et avant la compression D, on effectue l'étape supplémentaire suivante :
B2. enlever à nouveau une partie d'une face frontale des profilés en matière plastique et/ou enlever au moins partiellement de la matière déplacée par la fusion C des profilés en matière plastique au moyen d'un outil d'usinage.
